Europäisches Patentamt

European Patent Office

Office européen des brevets

(19)

(11)     **EP 0 827 015 B1**

(12)     **EUROPÄISCHE PATENTSCHRIFT**

(45) Veröffentlichungstag und Bekanntmachung des Hinweises auf die Patenterteilung:
**10.12.2003   Patentblatt 2003/50**

(51) Int Cl.⁷: $G03B\ 27/46$, $G03B\ 27/73$

(21) Anmeldenummer: **96810569.2**

(22) Anmeldetag: **29.08.1996**

(54) **Verfahren zur Erzeugung von Indexprints**

Method of producing index prints

Procédé pour la fabrication d'images composées

(84) Benannte Vertragsstaaten:
**CH DE FR GB IT LI**

(43) Veröffentlichungstag der Anmeldung:
**04.03.1998   Patentblatt 1998/10**

(73) Patentinhaber: **IMIP LLC**
**Wilmington, Delaware 19801 (US)**

(72) Erfinder:
• **Kraft Walter**
  **8049 Zürich (CH)**
• **Ursprung, Karl**
  **8156 Oberhasli (CH)**

(74) Vertreter: **Schwabe - Sandmair - Marx**
**Patentanwälte**
**P.O. Box 860245**
**81629 München (DE)**

(56) Entgegenhaltungen:
**EP-A- 0 586 773          US-A- 5 315 346**
**US-A- 5 400 152**

• **PATENT ABSTRACTS OF JAPAN vol. 012, no. 393 (E-670), 19.Oktober 1988 & JP 63 132571 A (TOSHIBA CORP), 4.Juni 1988, & JP 63 132 571 A**

**Beschreibung**

Die Erfindung betrifft ein Verfahren zum Erzeugen von Indexprints mit einer wählbaren Anzahl von positiven Aufsichtsbildem von zugehörigen fotografischen Vorlagen gemäss dem Oberbegriff des unabhängigen Patentanspruchs.

Wenn Kunden belichtetes Filmmaterial zur Bearbeitung in Auftrag geben, so wird im Fotolabor typischerweise das belichtete Filmmaterial entwickelt, um fotografische Vorlagen zu erhalten, von denen dann mittels eines fotografischen Kopiergeräts fotografische Kopien erstellt werden. In einem in der Praxis sehr häufigen Fall handelt es sich bei dem Filmmaterial um Negativfilme, die im Fotolabor entwickelt werden. Die fotografischen Vorlagen sind dann die einzelnen auf dem entwickelten Negativfilmstreifen befindlichen Bildfelder und die von ihnen erstellten fotografischen Kopien sind Papierbilder. Im folgenden wird der Einfachheit halber mit beispielhaftem Charakter auf diesen Fall Bezug genommen, d. h. die auf den Negativfilmen befindlichen Bildfelder stehen als repräsentatives Beispiel für fotografische Vorlagen, und die Papierbilder stehen als repräsentatives Beispiel für fotografische Kopien. Natürlich können z. B. auch Diapositive als Kopiervorlagen dienen und Folien als fotografische Kopien.

Nach Bearbeitung eines Kundenauftrages erhält der Kunde üblicherweise die entwickelten Negativfilme in Form von Filmstreifen, die jeweils beispielsweise vier bis sechs Bildfelder enthalten, zusammen mit den Papierbildem zurück. Häufig bewahrt der Kunde dann die Negativfilmstreifen getrennt von den Papierbildern auf. Die Papierbilder werden z. B. in einem Fotoalbum eingeklebt und die Negativfilmstreifen an einem getrennten Ort gesammelt. Falls nun Nachbestellungen gewünscht werden, ist es für den Kunden, vor allem, wenn es sich um einen Fotoamateur handelt, oft sehr schwierig, das gewünschte Bild auf den Negativfilmstreifen zu identifiziem. Insbesondere bei farbigen Negativfilmen ist es für eine ungeübte Person wegen der Farbumkehr und der Filmmaske sehr schwer, den Bildinhalt von Bildfeldern auf den Negativfilmstreifen zu beurteilen. Eine grosse Erleichterung stellen in diesem Zusammenhang sogenannte Indexprints dar. Bei diesen handelt es sich um einen einzelne Papierkopie, die beispielsweise die gleiche Grösse aufweist, wie ein Papierbild, welche aber mehrerer kleine Einzelbilder, die zu verschiedenen Bildfeldern auf dem Negativfilm gehören, in Form von positiven Aufsichtsbildern enthält.

Beispielsweise kann auf einem solchen Indexprint die Gesamtheit der auf einem Negativfilm befindlichen Bildfelder in Form einer Matrix von einzelnen positiven Aufsichtsbildern dargestellt sein. Zusätzlich zu den Einzelbildern enthält der Indexprint üblicherweise auch noch weitere Informationen. So kann beispielsweise für jedes Einzelbild vermerkt sein, welches die Nummer des zugehörigen Bildfeldes auf dem Negativfilm ist. Auch können weitere individuelle Bildfeldinformationen, die während der Erstellung des Indexprints individuell erzeugt werden oder auf dem Negativfilm vorhanden sind und von diesem abgelesen werden, vorhanden sein. Ferner kann der Indexprint auch auftragsspezifische Daten, wie z. B. die Filmidentifikationsnummer, sowie ein Firmenlogo, veränderliche Daten, z. B. das Datum, usw. enthalten.

Für den Kunden erfüllt der Indexprint ein praktisches Bedürfnis, weil er vom bildmässigen Inhalt eines Negativfilms anhand der positiven Aufsichtsbilder Kenntnis nehmen kann, ohne dass er den Film selbst betrachten oder berühren muss. Die aus der Farbumkehr des Negativfilms resultierenden Beurteilungsschwierigkeiten werden somit umgangen. Auch sind Indexprints für Nachbestellungen sehr vorteilhaft. Zum einen kann der Kunde anhand der positiven Aufsichtsbilder mit den zugeordneten Negativnummern in einfacher und zweifelsfreier Weise das gewünschte Bildfeld identifizieren. Zum anderen muss er die Negativstreifen nicht mehr zur Begutachtung in die Hand nehmen, so dass die Gefahr einer Beschädigung des Negativfilmstreifens, beispielsweise durch Kratzer, Schmutz, Staub oder Fingerabdrücke, welche die Qualität von nachbestellten Papierbildern negativ beeinflusst, deutlich reduziert wird.

Der Indexprint stellt somit ein "Inhaltsverzeichnis" eines Fotoalbums dar, welches insbesondere für Nachbestellungen besonders vorteilhaft und kundenfreundlich ist. Für die Zukunft ist daher und auch im Lichte neuerer Entwicklungen im Bereich fotografischer Materialien und der wachsenden Bedeutung der Videotechnologie (z. B. Foto-CDs) zu erwarten, dass Indexprints eine deutlich grössere Bedeutung zukommt und dass sie sich zu einem Standard in der Fotoverarbeitung entwickeln. Daher besteht das starke Bedürfnis, dass fotografische Kopiergeräte, mit denen fotografische Kopien von fotografischen Vorlagen erstellt werden, auch in der Lage sind, solche Indexprints entweder direkt zu erstellen, oder die notwendigen Daten in digitaler Form für ein externes Gerät bereitzustellen.

Die heute bekannten Technologien zur Erstellung von Indexprints lassen sich grob in zwei Kategorien einteilen. Die erste Kategorie beinhaltet Verfahren, bei dem die Indexprints auf rein optisch fotografischem Wege erstellt werden. Die Bildfelder auf dem Negativfilm werden durch optische Projektion in natürlichem oder verkleinertem Massstab auf Fotopapier aufkopiert. Die Einzelbilder der Matrix des Indexprints werden rein fotografisch mittels eines speziellen Objektivs direkt von den Vorlagen auf dem Negativfilm der Reihe nach auf Fotopapier aufbelichtet. Im Prinzip bestehen - abgesehen vom unterschiedlichen Vergrösserungsmassstab und der matrixförmigen Anordnung der Einzelbilder - kaum Unterschiede zur klassischen Arbeitsweise eines fotografischen Kopiergeräts. Diese rein fotografische Technologie wird beispielsweise in der EP-A-0,697,628 beschrieben. Auch wenn das dort vorgeschlagenen Verfahren vom Grundsatz her absolut funktionstüchtig und leistungsfähig ist, so unterliegt es doch z. B. der Einschränkungen, dass der Indexprint mittels eines fotografischen Kopiergeräts erstellt werden muss und nicht mittels eines anderen Ausgabegeräts erstellt werden kann.

In der zweiten Kategorie präsentiert sich die Technologie merklich verschieden. Hier wird nämlich die Vorlage (Bildfeld) zunächst durch einen optischen Abtaster in eine grosse Anzahl einzelner Bildpunkte zerlegt, die ihrerseits in drei Farben aufgespalten, als digitale Zahlenwerte dargestellt und abgespeichert werden. Von den derart gespeicherten Bildinhalten einer Anzahl aufeinanderfolgender Bildfelder eines Negativfilmstreifens werden anschliessend über einen Farbdrucker bzw. ein Bild-Ausgabegerät geeigneter Bauart (CRT-Belichter, Thermodrucker, Laserdrucker o.ä.) in einem Indexprint zusammengefasste Aufsichtbilder erzeugt. Beispiele dieser Technologie finden sich in US-A-4,903,068, US-A-4,933,773, US-A-5,184,227 sowie in US-A-5,400,152.

Gemäss der US-A-4,903,068 wird zur Erzeugung der fotografischen Kopie (Bildfeld) die Vorlage in der Belichtungsstation des fotografischen Kopiergeräts mit dem unmodulierten Leuchtfleck einer Schwarz-Weiss-Kathodenstrahlröhre (CRT) bereichsweise beleuchtet und über ein Abbildungsobjektiv und drei Farbfilter farbsequentiell auf Fotopapier übertragen. Während dieses Vorgangs wird ein Teil des Lichts des Leuchtflecks, nachdem es die Vorlage durchdrungen hat und bevor es das Abbildungsobjektiv erreicht, durch einen teilreflektierenden Spiegel zu einem Fotoempfänger umgelenkt. Die dabei erzeugten Bildsignale werden digitalisiert und für jedes Bildfeld des Negativfilms als Datensatz mit jeweils drei Farbdichtewerten pro Bildpunkt abgespeichert. Nach jeweils einer wählbaren vorbestimmten Anzahl kopierter Bildfelder werden die gespeicherten Bildsignale aus dem Speicher abgerufen und elektronisch zu einem Gesamtbild mit einer entsprechenden Anzahl verkleinerter Bilder aufbereitet. Dieses Gesamtbild wird als negatives Schwarz-Weis-Bild für jeweils eine Teilfarbe auf derselben Kathodenstrahlröhre dargestellt, mittels derer die fotografischen Kopien erstellt werden, und kann so als Indexprint auf das Fotopapier aufbelichtet werden.

Ein ähnliches Verfahren ist in der US-A-4,933,773 offenbart. Hier dient jedoch eine gewöhnliche Halogenglühlampe als Lichtquelle für die Aufbelichtung der Vorlage auf Fotopapier. Der Unterschied und Vorteil gegenüber der US-A-4,903,068 liegt darin, dass alle Bildpunkte simultan übertragen werden und somit die für die Aufbelichtung benötigte Zeit verkürzt wird. Zur Erstellung des Indexprints wird bei der Aufbelichtung einer Vorlage jeweils ein Teil des Kopierlichts nach dem Durchdringen der Vorlage in Richtung einer Videokamera ausgespiegelt. Die Videokamera nimmt die Bildinformation auf, trennt sie nach Farben, codiert sie digital und speichert sie ab. Nachdem eine vorgegebene Anzahl von Bildfeldern aufbelichtet wurde, werden die zugehörigen, digital gespeicherten Bildinformationen in ausgedünnter Form abgerufen und zu einer Matrix gruppiert und ein negativer Indexprint erzeugt. Dieser wird auf einer Kathodenstrahlröhre dargestellt und mittels eines Farbfiltersatzes und eines Schwenkspiegels im Abbildungsstrahlengang des Kopiergeräts auf das Fotopapier übertragen.

Diesen beiden Verfahren ist gemeinsam, dass die Erstellung des Indexprints bzw. die Gewinnung der benötigten digitalen Daten in der Belichtungsstation des fotografischen Kopiergeräts erfolgt. Nachteilig an diesen Verfahren ist, dass sie eines signifikanten apparativen Zusatzaufwandes, (hochauflösende Videokamera, Umlenkspiegel usw.) in der Belichtungsstation des Kopiergerätes bedürfen, der relativ kostenaufwendig ist. Ausserdem wird eine korrekte Belichtungssteuerung für die Erstellung der fotografischen Kopien zumindest erschwert, weil ein nicht genau bekannter Anteil der Kopierlichtintensität aus dem Belichtungsstrahlengang weggelenkt wird.

Normalerweise wird heutzutage in fotografischen Kopiergeräten (Printern) zur Erstellung fotografischer Kopien nicht mit standardisierten, einheitlichen Kopierlichtmengen gearbeitet, sondern es werden Belichtungssteuerungsverfahren eingesetzt, bei denen die möglichst optimalen Kopierlichtmengen, insbesondere die Belichtungszeiten für die drei Grundfarben Blau, Grün, Rot, für die einzelnen Bildfelder bestimmt werden. Dazu werden in einer der Belichtungsstation vorgeschalteten Messstation des Kopiergräts die individuellen Bildfelder der Negativfilme analysiert, indem sie bereichsweise mit Hilfe von Messlicht fotoelektrisch abgetastet werden, das von jedem Abtastbereich transmittierte oder remittierte Messlicht einer Detektoranordnung zugeführt, spektral zerlegt und in wellenlängen- und intensitätsabhängige elektrische Messsignale umgesetzt wird. Die elektrischen Messsignale werden anschliessend digitalisiert und zur Ermittelung der erforderlichen Kopierlichtmengen herangezogen.

Gemäss der US-A-5,184,227 bzw. der US-A-5,400,152 wird nun vorgeschlagen, die bei der Analyse der Vorlagen in der Messstation eines Kopiergeräts mittels eines örtlich hochauflösenden Farbscanners bestimmten Abtastdaten für die Erzeugung digitaler Repräsentationen der Bildhalte der einzelnen Bildfelder zu nutzen und mit diesen digitalen Repräsentationen die Indexprints zu erstellen. Dazu werden die Vorlagen in der Messstation mittels des örtlich hochauflösenden Farbscanners abgetastet, welcher für jeden Abtastbereich die Farbdichten in den drei Grundfarben Rot, Grün und Blau misst. Die Gesamtheit dieser Abtastdaten pro Vorlage wird dann zur Erzeugung der digitalen Repräsentation des Bildinhalts dieser Vorlage genutzt. Damit die Indexprints von genügend guter Qualität sind und einen guten optischen Eindruck des Bildinhalts erzeugen, wird mit einer hohen Anzahl von Abtastbereichen gearbeitet. In der US-A-5,184,227 findet sich beispielsweise der Hinweis, dass jede Vorlage mit einer Auflösung von 480 (vertikal) mal 252 (horizontal) Abtastbereichen abgetastet wird, d. h. die Vorlage wird in 120960 Abtastbereichen, die in Form einer 480×252-Matrix angeordnet sind, bezüglich ihrer Farbdichte in den Farben Blau, Grün, Rot ausgemessen. Zwar ist eine solch hohe Auflösung im Hinblick auf qualitativ hochwertige Indexprints durchaus vorteilhaft, aber im Hinblick auf die zweite ebensowichtige Aufgabe der Abtastdaten, nämlich der Bestimmung der korrekten Belichtungszeiten zu dienen, eher hinderlich, weil mit einer solchen Datenmenge heute übliche Verfahren zur Belichtungszeitberechnung inklusive Farb- und Dichtekorrekturen kaum noch mit vertretbarem Aufwand durchführbar sind. Aus.diesem Grunde werden gemäss der US-A-5,184,227 für die Belichtungszeitberechnung die Abtastdaten mehrerer Abtastbereiche zusammengefasst und auf einen Satz von 24 (vertikal) mal 36 (horizontal) reduziert, der dann für die Belichtungsberechnung verwendet wird. Es ist bekannt, das eine Auflösung von dieser Grössenordnung vollkommen ausreichend ist, um die vollständige farbliche Information einer fotografischen Vorlage bei der Belichtungsberechnung hinreichend gut zu berücksichtigen.

Das in der US-A-5,184,227 beschriebene Verfahren, die Vorlage mit einer sehr hohen örtlichen Auflösung farblich auszumessen und dann diesen Datensatz für die Belichtungsberechnung zu reduzieren, hat jedoch auch Nachteile. Durch die hohe örtliche Auflösung sind die einzelnen Abtastbereiche sehr klein und damit die sie jeweils beaufschlagenden Messlichtintensitäten sehr gering. Dies hat in der Regel eine geringere Messgenauigkeit für die Farbdichte zur Folge, weil das Signal/Rausch-Verhältnis deutlich schlechter ist als bei flächenmässig grösseren Abtastbereichen. Für eine möglichst korrekte Belichtungsberechnung ist es aber wünschenswert, die farbliche Information in einem Abtastbereich mit möglichst hoher Genauigkeit zu bestimmen. Üblicherweise ist es im Hinblick auf die korrekte Belichtungsberechnung vorteilhafter, die jeweilige Vorlage örtlich niedriger aufgelöst, also in grösseren Abtastbereichen, aber dafür mit einer sehr hohen Messgenauigkeit bezüglich der Farbinformation zu analysieren, als eine hohe örtliche Auflösung bei der Abtastung zu verwenden und dafür eine reduzierte Messgenauigkeit bezüglich der Farbinformation in Kauf zu nehmen.

Aus diesem Grunde wird in vielen modernen fotografischen Kopiergeräten bei der Abtastung der fotografischen Vorlagen hinsichtlich ihrer farblichen Zusammensetzung mit einer niedrigen bis mittleren örtlichen Auflösung von typischerweise 39×26 Abtastbereichen pro Vorlage gearbeitet und eine möglichst genaue Bestimmung der Farbinformation dieser Abtastbereiche angestrebt. Um die Genauigkeit der Farbinformation noch zu erhöhen, ist es beispielsweise bekannt, für jeden der Abtastbereiche anstelle der Bestimmung der drei Farbdichten in den Grundfarben Blau, Grün und Rot, eine spektrale Analyse des von dem Abtastbereich transmittierten oder remittierten Messlichts durchzuführen, bei der das Messlicht in z. B. 35 verschiedenen Wellenlängenbereichen des sichtbaren Spektrums bezüglich seiner Intensität untersucht wird. Pro Abtastbereich werden somit nicht mehr nur drei sondern 35 Abtastwerte bestimmt. Eine solch hohe spektrale Auflösung pro Abtastbereich würde in Kombination mit einer vorne erwähnten hohen örtlichen Auflösung des Farbscanners zu Daten relativ geringer Genauigkeit bezüglich der Farbinformation führen, und zudem eine Datenmenge produziern, die mit vertretbarem Aufwand kaum noch zu verarbeiten wäre.

Andererseits ist eine örtliche Auflösung von 39×26 Abtastbereichen pro Vorlage normalerweise zu gering, um diese Daten direkt als digitale Repräsentation des Bildinhalts zur Erstellung von Indexprints genügend hoher Qualität zu verwenden. Typischerweise sollten digitale Repräsentationen mindestens eine Auflösung von etwa 190×130 digitalen Bildpunkten aufweisen, damit die Einzelbilder auf dem Indexprint eine genügend hohe Qualität besitzen.

Es ist daher eine Aufgabe der Erfindung, ein Verfahren zur Erzeugung von Indexprints vorzuschlagen, welches es erlaubt, mit möglichst geringem Zusatzaufwand die bei der Analyse von fotografischen Vorlagen in einem fotografischen Kopiergerät anfallenden Daten zur Erstellung digitaler Repräsentationen der Bildinhalte der Vorlagen zu nutzen. Insbesondere soll das Verfahren für solche fotografischen Kopiergeräte geeignet sein, die zur Bestimmung der Belichtungswerte mit farbsensitiven Abtastsystemen arbeiten, welche eine niedrige bis mittlere örtliche Auflösung aufweisen, und trotzdem die Erzeugung qualitativ hochwertiger Indexprints ermöglichen.

Das diese Aufgaben lösende Verfahren zur Erzeugung von Indexprints mit einer wählbaren Anzahl von positiven Aufsichtsbildern von zugehörigen fotografischen Vorlagen ist durch die Merkmale des unabhängigen Patentanspruchs gekennzeichnet. Dem Wesen nach umfasst das erfindungsgemässe Verfahren also die folgenden Schritte:

jede der fotografischen Vorlagen wird in einer Messstation eines fotografischen Kopiergeräts mittels eines farbsensitiven Abtastsystems in einer Vielzahl von ersten Abtastbereichen fotoelektrisch abgetastet, um mit Hilfe von daraus gewonnenen Abtastdaten jeweils Belichtungswerte für die Erstellung fotografischer Kopien von den Vorlagen zu ermitteln;

mittels der Abtastdaten des farbsensitiven Abtastsystems wird für jede Vorlage ein digitaler Farbdatensatz bestimmt, in dem für jeden einzelnen ersten Abtastbereich jeweils repräsentative Farbdaten enthalten sind;

mit Hilfe des digitalen Farbdatensatzes wird für jede Vorlage eine digitale Repräsentation des Bildinhaltes der Vorlage erstellt;

die einzelnen digitalen Repräsentationen der einzelnen fotografischen Vorlagen, die zu der wählbaren Anzahl von Aufsichtsbildern gehören, werden zu einem digitalen Gesamtbild gruppiert, von dem mittels eines Ausgabegeräts ein Indexprint auf einem Ausgabemedium erzeugbar ist.

Das erfindungsgemässe Verfahren ist insbesondere dadurch gekennzeichnet, dass ein farbsensitives Abtastsystem mit niedriger bis mittlerer örtlicher Auflösung verwendet wird, dass die fotografischen Vorlagen in der Messstation zuätzlich mittels eines örtlich hochauflösenden Dichteabtasters in einer Vielzahl von zweiten Abtastbereichen fotoelektrisch abgetastet werden, dass aus den daraus gewonnenen Abtastdaten des Dichteabtasters für jede Vorlage ein digitaler Dichtedatensatz bestimmt wird, in dem für die Vorlage repräsentative Dichtedaten enthalten sind, und der eine höhere örtliche Auflösung aufweist als der Farbdatensatz, und dass für die Erstellung der digitalen Repräsentation des Bildinhalts der jeweiligen fotografischen Vorlage sowohl der zugehörige Farbdatensatz als auch der zugehörige Dichtedatensatz verwendet wird.

Mittels des Dichteabtasters wird für jeden zweiten Abtastbereich eine Neutraldichte, z. B. ein Grauwert, bestimmt, welcher repräsentativ für die Helligkeit (Dichte) des jeweiligen zweiten Abtastbereichs ist. Der Dichtedatensatz, in welchem die Gesamtheit der Neutraldichtedaten einer Vorlage zusammengefasst sind, stellt somit ein örtlich hochaufgelöstes Grautonbild in digitaler Form dar. Dieses hochaufgelöste Grautonbild wird mittels des örtlich niedriger aufgelösten Farbdatensatzes, der zu dieser Vorlage gehört, koloriert, um auf diese Weise eine digitale farbliche Repräsentation der Vorlage zu erstellen, welche ihrerseits für die Erzeugung von Indexprints verwendbar ist. Durch die erfindungsgemässen Massnahmen wird es also ermöglicht, in fotografischen Kopiergeräten, die mit farbsensitiven Abtastsystemen niedriger bis mittlerer örtlicher Auflösung - beispielsweise $39\times26$ Abtastbereiche pro Vorlage - arbeiten, unter sehr geringem Zusatzaufwand digitale Repräsentationen der Bildinhalte der Vorlagen zu erstellen, die eine genügend hohe örtliche Auflösung von beispielsweise $190\times130$ Bildpunkten pro Vorlage aufweisen, um daraus qualitativ hochwertige farbige Indexprints zu erstellen. Die für die Erkennung des Bildinhalts einer Vorlage wichtige Dichteinformation wird aus den örtlich hochaufgelösten Neutraldichtewerten des Dichteabtasters gewonnen, während die für den ästhetischen Eindruck wichtige Farbinformation aus den örtlich niedriger aufgelösten Farbdaten des farbsensitiven Abtastsystems gewonnen wird.

Wie bereits vorne erwähnt, ist es im Hinblick auf eine möglichst optimale Bestimmung der Belichtungswerte für die Erstellung fotografischer Kopien von den Vorlagen vorteilhaft, die farbsensitive Abtastung der Vorlagen mit einer niedrigen bis mittleren Auflösung von beispielsweise etwa $39\times26$ Abtastbereichen pro Vorlage durchzuführen, weil bei einer solchen Auflösung die einzelnen Abtastbereiche grösser sind und somit eine höhere Messgenauigkeit bezüglich der Farbinformation erreichbar ist, und weil die anfallende Datenmenge mit vertretbarem Aufwand weiterverarbeibar ist, auch wenn pro Abtastbereich eine hohe spektrale Auflösung von z. B. 35 Wellenlängenbereichen verwendet wird. Das erfindungsgemässe Verfahren bietet den Vorteil, dass mit Hilfe dieser örtlich relativ grob aufgelösten Farbdaten Indexprints hoher Qualität erstellt werden können, ohne dass dafür eine zusätzliche, örtlich höher aufgelöste Messung der vollständigen Farbinformation der Vorlagen vonnöten ist.

In manchen modernen fotografischen Kopiergeräten, wie z. B. den Hochleistungsprintern des Fotofinishing-Systems SYNTRA der Anmelderin, sind zudem bereits zwei Messsysteme für die Analyse der fotografischen Vorlagen vorgesehen: ein farbsensitives Abtastsystem mit grosser Messgenauigkeit bezüglich der Farbinformation und niedriger bis mittlerer örtlicher Auflösung, sowie ein Dichteabtaster, welcher ein örtlich hochaufgelöstes Grautonbild der Vorlage liefert; und dessen Dichtedaten zur Beurteilung der Schärfe einer Vorlage verwendet werden. Für solche Kopiergeräte ist das erfindungsgemässe Verfahren besonders vorteilhaft einsetzbar, weil sowohl die benötigten Farbdaten als auch die benötigten Dichtedaten mittels den sowieso vorhandenen Messsystemen, respektive den von ihnen gelieferten Messdaten, bestimmbar sind.

Das erfindungsgemässe Verfahren ist aber auch für solche Kopiergeräte vorteilhaft, die noch nicht über einen hochauflösenden Dichteabtaster verfügen. Mit relativ geringem Aufwand kann nämlich in solche Kopiergeräte ein zusätzlicher Abtaster eingebaut werden, der eine für die Erstellung von Indexprints genügend hohe örtliche Auflösung aufweist, aus Kostengründen jedoch nur Dichtedaten liefert. An diesen Dichteabtaster werden auch keine so hohen Anforderungen bezüglich der Messgenauigkeit gestellt, wie an das farbsensitive Abtastsystem, was im Hinblick auf eine möglichst kostengünstige und wenig aufwendige Nachrüstung vorteilhaft ist. Mit dem erfindungsgemässen Verfahren ist es somit möglich, unter geringem Aufwand mit bereits existierenden Kopiergeräten Indexprints zu erstellen, bzw. die notwendigen Daten in digitaler Form für ein externes Gerät bereitzustellen.

Das erfindungsgemässe Verfahren bietet auch die Möglichkeit, die örtliche Auflösung der digitalen Repräsentationen, bzw. der Einzelbilder des Indexprints, d. h. die Anzahl der digitalen Bildpunkte pro Vorlage, zu verändern. Falls beispielsweise der Dichteabtaster eine höhere örtliche Auflösung aufweist, als sie für die Erstellung der gewünschten Indexprints vonnöten ist, so werden bei der Bestimmung des Dichtedatensatzes für eine Vorlage jeweils die mittels des Dichteabtasters gewonnenen Abtastdaten aus mehreren zweiten Abtastbereichen zusammengefasst, so dass die örtliche Auflösung des Dichtedatensatzes einerseits kleiner ist, als die örtliche Auflösung des Dichteabtasters und andererseits grösser als die örtliche Auflösung des Farbdatensatzes.

Bei einem bevorzugten Ausführungsbeispiel des erfindungsgemässen Verfahrens wird für jede fotografische Vorlage aus dem zugehörigen Farbdatensatz mittels Bestimmung von Zwischenwerten ein verfeinerter Farbdatensatz für diese Vorlage ermittelt, der im wesentlichen die gleiche örtliche Auflösung aufweist wie der Dichtedatensatz. Für die Erstellung der digitalen Repräsentation des Bildinhalts der jeweiligen fotografischen Vorlage wird dann sowohl der zugehörige verfeinerte Farbdatensatz als auch der zugehörige Dichtedatensatz verwendet.

Die Zwischenwerte zur Erstellung des verfeinerten Farbdatensatzes werden vorzugsweise jeweils mittels einer Interpolation bestimmt, bei welcher die Farbdaten des zu bestimmenden Zwischenwerts aus dem gewichteten Mittelwert der Farbdaten der örtlich unmittelbar benachbarten ersten Abtastbereiche ermittelt werden.

Besonders günstig ist es, das Gewicht, mit welchem die Farbdaten der einzelnen benachbarten ersten Abtastbereiche in die Interpolation eingehen, jeweils mittels einer Gewichtsfunktion zu bestimmen, die von zwei Ortskoordinaten abhängig ist, welche die relative örtliche Lage des jeweiligen ersten Abtastbereichs im Bezug auf die örtliche Lage des zu bestimmenden Zwischenwerts beschreiben.

Diese Gewichtsfunktion kann als das Produkt zweier Teilfunktionen gewählt werden, wobei die erste Teilfunktion nur von der ersten Ortskoordinate abhängig ist und die zweite Teilfunktion nur von der zweiten.

Eine spezielle Variante des bevorzugten Ausführungsbeispiels besteht darin, dass die erste Teilfunktion linear von der ersten Ortskoordinate abhängig ist, und dass die zweite Teilfunktion linear von der zweiten Ortskoordinate abhängig ist.

Eine Weiterentwicklung des bevorzugten Ausführungsbeispiels ist dadurch gekennzeichnet, dass für die Bestimmung der Gewichte, mit denen die jeweiligen Farbdaten in die Interpolation zur Erstellung des verfeinerten Farbdatensatzes eingehen, die Dichtedaten des zugehörigen Dichtedatensatzes berücksichtigt werden.

Bevorzugt werden dazu anhand derjenigen Dichtdaten des Dichtedatensatzes, die zu den zweiten Abtastbereichen gehören, welche bezüglich ihrer örtlichen Lage zwischen den in die jeweilige Interpolation eingehenden ersten Abtastbereichen liegen, die Änderungen der Dichtedaten sowohl in einer ersten Richtung als auch in einer zweiten Richtung ermittelt, und diese Änderungen, insbesondere ihre Beträge oder Quadrate, bei der Bestimmung der Gewichte, mit denen die jeweiligen Farbdaten in die Interpolation zur Erstellung des verfeinerten Farbdatensatzes eingehen, berücksichtigt.

Bevorzugt werden im Rahmen des erfindungsgemässen Verfahrens die Abtastdaten des farbsensitiven Abtastsystems Farb- und/oder Dichtekorrekturen unterzogen und die korrigierten Abtastdaten für die Bestimmung der digitalen Farbdatensätze verwendet.

Auch ist es möglich, die Gradation der einzelnen digitalen Repräsentationen oder des digitalen Gesamtbildes der Gradation des Ausgabemediums anzupassen.

Zur Erhöhung des Schärfeeindrucks des Indexprintes ist es vorteilhaft, die Dichtedaten der Dichtedatensätze einer digitalen Filterung zu unterziehen.

Im folgenden wird die Erfindung anhand der Zeichnung näher erläutert. In der schematischen, nicht massstäblichen Zeichnung zeigen:

Fig. 1: eine Darstellung einer Anordnung der wesentlichen Teile eines fotografischen Kopiergeräts,

Fig. 2: eine Darstellung eines Ausschnitts einer fotografischen Vorlage, zur Erläuterung einer Vorgehensweise bei der Ermittelung eines verfeinerten Farbdatensatzes, und

Fig. 3: ein Diagramm, in welchem eine Dichtfunktion, der Betrag der Ableitung dieser Dichtefunktion und eine Teilfunktion einer Gewichtsfunktion jeweils in Abhängigkeit einer Ortskoordinate dargestellt sind.

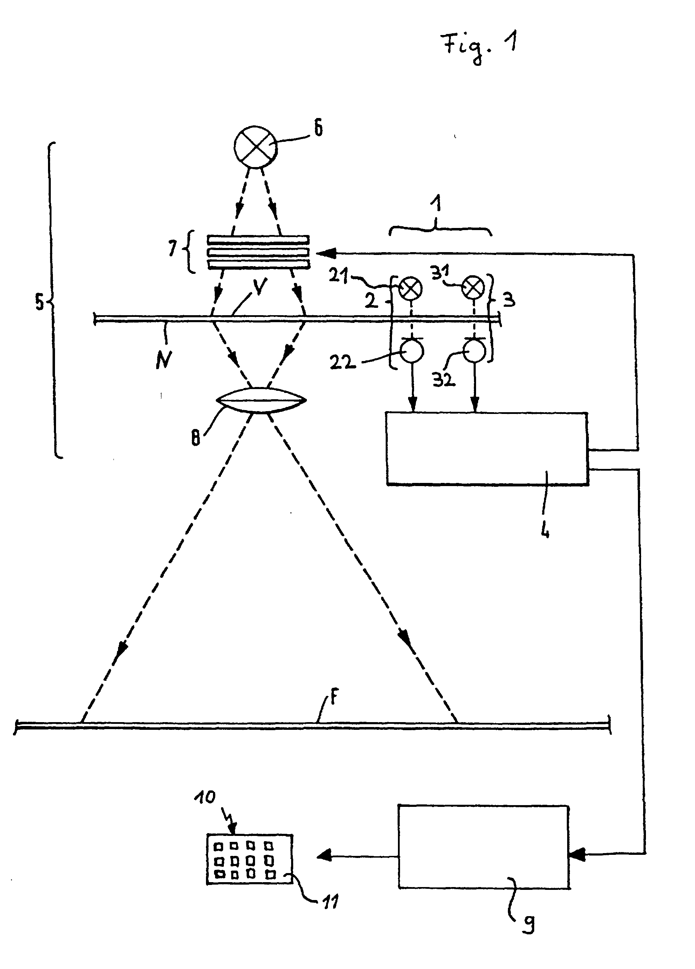

Bei der Erstellung fotografischer Kopien von auf Filmmaterial befindlichen fotografischen Vorlagen in fotografischen Kopiergeräten werden die Vorlagen üblicherweise in einer Messstation 1 (Fig. 1 ) des Kopiergeräts mittels eines farbsensitiven Abtastsystems 2 in einer Vielzahl von ersten Abtastbereichen fotoelektrisch abgetastet, um mit Hilfe von daraus gewonnenen Abtastdaten für jede Vorlage Belichtungswerte für die Erstellung der fotografischen Kopien zu ermitteln.

Bei dem erfindungsgemässen Verfahren zur Erzeugung von Indexprints 10 (Fig. 1 ) mit einer wählbaren vorgegebenen Anzahl von positiven Aufsichtsbildem von zugehörigen fotografischen Vorlagen, wird typischerweise mittels dieser Abtastdaten für jede der Vorlagen ein digitaler Farbdatensatz bestimmt, welcher für jeden ersten Abtastbereich repräsentative Farbdaten enthält. Diese Farbdaten sind beispielsweise jeweils ein Tripel von Farbwerten, welches die farbliche Information des zugehörigen ersten Abtastbereichs repräsentiert. Mit Hilfe des digitalen Farbdatensatzes wird dann für jede Vorlage eine digitale Repräsentation des Bildinhaltes dieser Vorlage bestimmt. Die einzelnen digitalen Repräsentationen der einzelnen Vorlagen, die zu der wählbaren Anzahl von Aufsichtsbilder gehören, welche auf dem zu erzeugenden Indexprint 10 darzustellen sind, werden dann zu einem digitalen Gesamtbild gruppiert, von dem mittels eines Ausgabegeräts 9 ein Indexprint 10 auf einem Ausgabemedium 11 erzeugbar ist. Das erfindungsgemässe Verfahren ist insbesondere durch die folgenden Verfahrensschritte gekennzeichnet:

- zur fotoelektrischen Abtastung der Vorlagen wird ein farbsensitives Abtastsystem 2 mit niedriger bis mittlerer örtlicher Auflösung verwendet. Dabei ist mit "niedriger bis mittlerer örtlicher Auflösung" gemeint, dass die Anzahl der ersten Abtastbereiche pro Vorlage höchstens in der Grössenordnung von $10^3$ liegt, also beispielsweise höchstens 1000-2000 beträgt. Insbesondere sind damit auch solche farbsensitiven Abtastsysteme umschlossen, die in vielen modernen fotografischen Kopiergeräten enthalten sind, und die jede Vorlage mit einer örtlichen Auflösung von etwa 39×26 abtasten, d. h. die insgesamt 1014 Abtastbereiche pro Vorlage sind örtlich bezüglich der Vorlage in Form einer Matrix mit 39 Zeilen und 26 Spalten angeordnet;

- zusätzlich werden die fotografischen Vorlagen in der Messstation 1 mittels eines örtlich hochauflösenden Dichteabtasters 3 in einer Vielzahl von zweiten Abtastbereichen fotoelektrisch abgetastet. Aus den daraus gewonnenen Abtastdaten des Dichteabtasters 3 wird für jede Vorlage ein digitaler Dichtedatensatz bestimmt, in dem für die Vorlage repräsentative Dichtedaten enthalten sind. Dabei ist mit der Bezeichnung "örtlich hochauflösend" gemeint, dass die Anzahl der zweiten Abtastbereiche pro Vorlage um mindestens eine Grössenordnung grösser ist als die Anzahl der ersten Abtastbereiche, welche eine niedrige bis mittlere örtliche Auflösung repräsentiert. Solche hochauflösenden Dichteabtaster sind in einigen an sich bekannten fotografischen Kopiergeräten bereits zur Beurteilung der Schärfe einer Vorlage vorgesehen. Sie weisen beispielsweise eine örtliche Auflösung von etwa 390×260 pro Vorlage auf, d. h. die insgesamt 101400 zweiten Abtastbereiche pro Vorlage sind örtlich bezüglich der Vorlage in Form einer Matrix mit 390 Zeilen und 260 Spalten angeordnet;

- für die Erstellung der digitalen Repräsentation des Bildinhalts der jeweiligen Vorlage wird sowohl der zugehörige Farbdatensatz als auch der zugehörige Dichtedatensatz verwendet.

Zur begrifflichen Abgrenzung sei hier noch erwähnt, dass mit dem Begriff "Dichte", wie er im Zusammenhang mit "Dichteabtaster" oder "Dichtedaten" verwendet wird, eine farblich undifferenzierte Neutraldichte, z. B. ein Grauwert, gemeint ist, also eine Grösse, welche repräsentativ für die Helligkeit (Dichte) des jeweils abgetasteten Bereichs ist. Der Dichtedatensatz, in welchem die Gesamtheit der Neutraldichtedaten einer Vorlage zusammengefasst sind, stellt somit z. B. ein örtlich hochaufgelöstes Grautonbild in digitaler Form dar.

Wie bereits erwähnt, verfügen manche an sich bekannten fotografischen Kopiergeräte bereits über ein farbsensitives Abtastsystem 2 und einen hochauflösenden Dichteabtaster 3, so dass in diesem Fall diesbezüglich keine Nachrüstung des Kopiergerätes erforderlich ist, um die für den Farbdatensatz und den Dichtedatensatz erforderlichen Abtastdaten zu bestimmen. Solche Kopiergeräte können durch das erfindungsgemässe Verfahren besonders einfach dazu genutzt werden, um Indexprints 10 zu erzeugen bzw. die dafür benötigten digitalen Repräsentationen der Bildinhalte zur Verfügung zu stellen. Sollte das Kopiergerät nur über ein farbsensitives Abtastsystem 2 verfügen, so ist es mit sehr geringem Aufwand möglich, als zweites Abtastsystem einen hochauflösenden Dichteabtaster 3 zu installieren. Vorteilhaft ist dabei, dass zum einen solche hochauflösenden Dichteabtaster zur Bestimmung farblich undifferenzierter Dichten kostengünstig sind und zum anderen das bereits vorhandenen farbsensitive Abtastsystem in im wesentlichen unveränderter Weise weiterhin benutzt werden kann. Ferner müssen an den Dichteabtaster auch nicht so hohe Anforderungen bezüglich der Messgenauigkeit gestellt werden wie an das farbsensitive Abtastsystem, was im Hinblick auf die Kosten für die Nachrüstung mit einem solchen Dichteabtaster ebenfalls von Vorteil ist.

Für das folgende wird daher davon ausgegangen, dass das fotografische Kopiergerät sowohl über ein farbsensitives Abtastsystem niedriger bis mittlerer Auflösung als auch über einen hochauflösenden Dichteabtaster verfügt.

Weiterhin wird in der folgenden Beschreibung der Einfachheit halber und mit beispielhaftem Charakter auf den in der Praxis sehr häufigen Fall Bezug genommen, dass es sich bei dem Filmmaterial um Negativfilme handelt, auf welchen sich einzelne Bildfelder als fotografische Vorlagen befinden, und dass die von den Bildfeldern erstellten fotografischen Kopien Papierbilder sind. Die auf den Negativfilmen befindlichen Bildfelder stehen somit als repräsentatives Beispiel für fotografische Vorlagen, und die Papierbilder stehen als repräsentatives Beispiel für fotografische Kopien. Es versteht sich, dass das erfindungsgemässe Verfahren nicht auf dieses Beispiel beschränkt ist. So können insbesondere z. B. auch Diapositive als fotografische Vorlagen dienen und Folien als fotografische Kopien.

Zum besseren Verständnis der Erfindung wird nun zunächst die allgemeine Funktionsweise eines typischen, an sich bekannten fotografischen Kopiergeräts erläutert, mit dem fotografische Kopien von fotografischen Vorlagen erstellt werden. In Fig. 1 ist eine Anordnung der wesentlichen Teile eines fotografischen Kopiergeräts, welches für das erfindungsgemässe Verfahren geeignet ist, schematisch dargestellt. Das fotografische Kopiergerät umfasst im wesentlichen die Messstation 1, die das farbsensitive Abtastsystem 2 mit einer ersten Messlichtquelle 21 und einer ersten Detektoranordnung 22 sowie den Dichteabtaster 3 mit einer zweiten Messlichtquelle 31 und einer zweiten Detektoranordnung 32 enthält. Ein die Bildfelder V enthaltender Negativfilm N wird in der Messstation 1 zum einen von dem örtlich niedrig bis mittel auflösenden farbsensitiven Abtastsystem 2 in einer Vielzahl von ersten Abtastbereichen fotoelektrisch abgetastet und zum anderen von dem hochauflösenden Dichteabtaster 3 in einer Vielzahl von zweiten Abtastbereichen fotoelektrisch abgetastet. Das von jedem ersten Abtastbereich des Negativfilms N transmittierte Licht wird von der ersten Detektoranordnung 22 spektral zerlegt und in wellenlängen- und intensitätsabhängige elektrische Messsignale umgesetzt. Anschliessend werden diese elektrischen Messsignale digitalisiert und zur Ermittlung der für das Aufbelichten der Vorlage V optimalen Belichtungswerte, z. B. die Kopierlichtmengen in den Farben Blau, Grün, Rot, ausgewertet. Diese Digitalisierung und Auswertung kann sowohl in der ersten Detektoranordnung 22 als auch in einer nachgeschalteten Rechen- und Steuereinheit 4 erfolgen. Die mittels des Dichteabtasters 3 gewonnenen örtlich hochaufgelösten Abtastdaten werden üblicherweise zur Beurteilung der Schärfe des Bildfeldes V verwendet und dienen z. B. der Bestimmung von Detailkontrasten. Typischerweise werden diese Abtastdaten ebenfalls zur Bestimmung der Belichtungswerte herangezogen. Mit Hilfe der für die jeweilige Vorlage V spezifischen Belichtungswerte werden von der Rechen- und Steuereinheit 4 Steuersignale erzeugt, die zur Steuerung von in der nachfolgenden Belichtungsstation 5 vorgesehenen Farbverschlüssen 7 dienen (selbstverständlich sind auch andere an sich bekannte Verfahren zur Belichtung in den drei Farben geeignet). In dieser Belichtungsstation 5 erfolgt das eigentliche Aufbelichten des jeweiligen Bildfeldes V auf Fotopapier F. Das Aufbelichten der Bildfelder auf Fotopapier erfolgt derart, dass die Farbverschlüsse 7 entsprechend den in der Rechen- und Steuereinheit 4 erzeugten Steuersignalen in den Strahlengang einer Kopierlichtquelle 6 eingebracht werden. Mittels einer Abbildungsoptik 8 wird dann das entsprechende Bildfeld V auf das Fotopapier F abgebildet. Nachfolgend wird das belichtete Fotopapier F in einem nicht dargestellten Papierprozessor entwickelt. Soweit entspricht die in Fig. 1 dargestellte Anordnung dem Stand der Technik, wie er in zahlreichen Druckschriften beschrieben ist. Natürlich gehört das in Fig. 1 symbolisch angedeutete Ausgabegerät 9 für die Indexprints 10 auf dem Ausgabemedium 11 (z. B. Papier) nicht unbedingt zu dem fotografischen Kopiergerät. Es kann sich hierbei auch um ein externes Ausgabegerät 9 handeln.

Verfahren, mit denen aus den Abtastdaten die für die jeweilige Vorlage V optimalen Belichtungswerte (Kopierlichtmengen) bzw. Belichtungskorrekturen bestimmt werden, sind beispielsweise in den Druckschriften EP-A-0,360,751; EP-A-0,475,897; und EP-A-0,586,773 beschrieben und werden hier nicht weiter erläutert. Es sei jedoch erwähnt, dass einige der im folgenden näher erläuterten Transformationen, Normierungen oder Korrekturen der ursprünglichen Abtastdaten auch im Rahmen bekannter Belichtungsberechnungsverfahren in gleicher oder sinngemäss gleicher Weise durchgeführt werden, so dass sie sowohl für die Belichtungsberechnung als auch für die Erstellung der digitalen Repräsentationen in einem gemeinsamen Arbeitsgang erfolgen können.

Die für die Erstellung der digitalen Repräsentationen bzw. des digitalen Gesamtbildes durchzuführenden Verfahrensschritte, insbesondere die weiter hinten beschriebenen Berechnungen, können z.B. ganz oder teilweise in der Rechen- und Steuereinheit 4 des Kopiergerätes durchgeführt werden, welche anschliessend die digitalen Repräsentationen oder das digitale Gesamtbild an das Ausgabegerät 9 übermittelt. Natürlich ist es auch möglich, eine zusätzliche, mit der Rechen- und Steuereinheit 4 verbindbare Einheit zur Erstellung der digitalen Repräsentationen bzw. des digitalen Gesamtbilds vorzusehen, in welche dann beispielsweise das Ausgabegerät 9 integriert sein kann.

Das erfindungsgemässe Verfahren zur Erstellung von Indexprints 10 beruht darauf, dass für jede der fotografischen Vorlagen V sowohl ein örtlich niedrig bis mittel aufgelöster Farbdatensatz als auch ein örtlich hochaufgelöster Dichtedatensatz ermittelt werden, die dann beide für die Erstellung der digitalen farblichen Repräsentationen der Bildinhalte der Vorlagen V herangezogen werden, wobei der Dichtedatensatz mittels des Farbdatensatzes koloriert wird.

Der Farbdatensatz enthält für jeden der ersten Abtastbereiche repräsentative Farbdaten. In einer bevorzugten Ausführungsform des erfindungsgemässen Verfahrens, enthält der Farbdatensatz für jeden der ersten Abtastbereiche jeweils ein Tripel von Farbwerten $k_0$, $k_1$ und $k_2$. Dabei ist es für das weitere Verfahren vorteilhaft, wenn die drei Farbwerte in einer Form vorliegen, in welcher der Farbwert $k_0$ als "Neutaldichte" auf einer "Dichte-Achse" und die beiden anderen Farbwerte $k_1$, $k_2$ als "Farbkoordinaten" einer Farbebene aufgefasst werden können, weil dadurch eine getrennte Betrachtung von Dichte und Farbe ermöglicht wird. Für die folgenden Erläuterungen wird auf diese Form des Farbdatensatzes Bezug genommen.

In der Regel ist es natürlich nicht so, dass die von dem farbsensitiven Abtastsystem 2 bestimmten "rohen" Abtastdaten für die einzelnen ersten Abtastbereiche unmittelbar in einer solchen Form mit einem Neutaldichtewert $k_0$ und zwei Farbkoordinaten $k_1$, $k_2$ pro erstem Abtastbereich vorliegen. Je nach Art der rohen Abtastdaten können diese aber durch eine daran angepasste Farbraumtransformation in die gewünschte Form transformiert werden. Auch ist es häufig wünschenswert, die von dem farbsensitiven Abtastsystem 2 bestimmten rohen Abtastdaten einer Normierung bzw. einer Korrektur zu unterziehen. Ziel dieser Normierung bzw. Korrektur ist es z. B., filmtypbedingte Farbstiche, Farbstiche, die auf die Beleuchtungsbedingungen bei der Aufnahme zurückzuführen sind, sowie Abweichungen von einer idealen Belichtung zu kompensieren. Solche Farbraumtransformationen, Normierungen und Korrekturen der rohen Abtastdaten, die auch bei Belichtungsberechnungen erfolgen, können beispielsweise so durchgeführt werden, wie es in der EP-A-0,586,773 oder in der EP-A-0,475,897 beschrieben ist. Sie werden deshalb hier nur knapp anhand zweier Beispiele skizziert.

Ist das farbsensitive Abtastsystem 2 beispielsweise ein solches, welches als rohe Abtastdaten für jeden ersten Abtastbereich die Farbdichten in den drei Farben Blau, Grün und Rot b, g, r ermittelt, so werden diese Werte b, g, r mit Referenzdichten (siehe z. B. EP-A-0,475,897) verglichen, die als eine "Norm" für die Farbdichten einer Vorlage V anzusehen sind, und daraus Korrekturen b', g', r' ermittelt, welche die Abweichungen von dieser Norm beschreiben. Mittels einer Farbraumtransformation gemäss der Beziehung:

$$\begin{bmatrix} k_1 \\ k_2 \\ k_0 \end{bmatrix} = \begin{bmatrix} 0 & \cos(30°) & -\cos(30°) \\ 1 & -0.5 & -0.5 \\ 0.1 & 0.6 & 0.3 \end{bmatrix} \cdot \begin{bmatrix} b - b' \\ g - g' \\ r - r' \end{bmatrix} \qquad (I)$$

werden dann die drei Farbwerte $k_0$, $k_1$, $k_2$ ermittelt, welche die gewünschte Form aufweisen, d. h. $k_0$ repräsentiert den Neutraldichtewert, während $k_1$ und $k_2$ zwei Farbkoordinaten darstellen. Aufgrund der Normierung entspricht der Ursprung des neuen Koordinatensystems einem neutralen grau mit normaler, d.h. durchschnittlicher Dichte.

Im zweiten Beispiel ist das farbsensitive Abtastsystem 2 ein solches, mit dem - wie bereits vorne erwähnt - eine spektrale Analyse des von dem jeweiligen ersten Abtastbereich transmittierten oder remittierten Messlichts durchgeführt wird. Das Messlicht wird in n verschiedenen Wellenlängenbereichen des sichtbaren Spektrums bezüglich seiner Intensität untersucht. Beispielsweise wird das Messlicht in n=35 Wellenlängenbereichen analysiert, was eine deutlich höhere spektrale Auflösung pro erstem Abtastbereich bedeutet, als beispielsweise die Bestimmung der drei Farbdichten in den den Farben Blau, Grün, Rot. Pro erstem Abtastbereich werden somit n spektrale Messignale ermittelt, welche der Transmission bzw. der Remission der Vorlage in diesem ersten Abtastbereich für die verschiedenen Wellenlängenbereiche entsprechen. Diese spektralen Messwerte werden durch Logarithmieren in n spektrale Dichtewerte umgeformt und mit entsprechenden Referenzdichten, z. B. einer neutral grauen Norm-Vorlage verglichen (siehe z. B. EP-A-0,475,897). Anschliessend erfolgt eine Datenkompression mittels einer Transformation, vorzugsweise mittels der Karhunen-Loève-Transformation. Von den dabei gewonnenen Transformationskoeffizienten werden nach bestimmten Kriterien (siehe z. B. EP-A-0,475,897) eine Anzahl von Transformationskoeffizienten ausgewählt, die mit hoher Genauigkeit repräsentativ für die spektrale Dichteverteilung des betrachteten ersten Abtastbereichs sind. Insbesondere können drei Transformationskoeffizienten ausgewählt werden, die näherungsweise die oben beschriebenen Form haben, d. h. einer der Koeffizienten kann als Neutraldichtewert $k_0$ aufgefasst werden und die beiden anderen als Farbkoordinaten $k_1$, $k_2$.

Alternativ ist es auch möglich, wie beispielsweise in der EP-A-0,586,773 beschrieben, auf den Vergleich der n spektralen Dichtewerte mit den entsprechenden Referenzdichten zu verzichten, die n spektralen Dichtewerte direkt der Karhunen-Loève-Transformation zu unterziehen und die drei ausgewählten Transformationskoeffizienten anschliessend einer Normierung zu unterwerfen.

Mit den vorstehend knapp skizzierten Verfahren ist es somit beispielsweise möglich, aus den "rohen" Abtastdaten des örtlich niedrig bis mittel auflösenden farbsensitiven Abtastsystems 2 für jede Vorlage V einen digitalen Farbdatensatz zu erstellen, der für jeden ersten Abtastbereich ein Tripel von (normierten) Farbwerten $k_0$, $k_1$, $k_2$ enthält, wobei $k_0$ einem Neutaldichtewert darstellt und $k_1$, $k_2$ zwei Farbkoordinaten repräsentieren.

Die Abtastdaten des hochauflösenden Dichteabtasters 3 werden ebenfalls derart transformiert bzw. normiert, dass sie weitestgehend an die Neutraldichtewerte $k_0$ des Farbdatensatzes angeglichen sind. Mittels des örtlich hochauflösenden Dichteabtasters 3 wird beispielsweise für jeden zweiten Abtastbereich ein farblich undifferenzierter Neutraldichtewert bestimmt, welche repräsentativ für die Helligkeit (Dichte) des jeweiligen zweiten Abtastbereichs ist. Der zu erstellende Dichtedatensatz muss nicht unbedingt die gleiche örtliche Auflösung aufweisen, die mit dem Dichteabtaster erreichbar ist. So ist es beispielsweise möglich, die örtliche Auflösung des Dichtedatensatzes relativ zu der maximalen örtlichen Auflösung des Dichteabtasters 3 zu reduzieren, indem bei der Bestimmung des Dichtedatensatzes jeweils mehrere zweite Abtastbereiche zu einem Vorlagenbereich zusammengefasst werden und die Neutraldichtewerte aus diesen zweiten Abtastbereichen zu einem neuen Neutraldichtewert $k_d$ für diesen Vorlagenbereich zusammengefasst werden. Der Dichtedatensatz weist dann eine örtliche Auflösung auf, die zum einen kleiner ist, als die örtliche Auflösung des Dichteabtasters und andererseits grösser, als die örtliche Auflösung des Farbdatensatzes und enthält für jeden Vorlagenbereich einen seine Helligkeit repräsentierenden Neutraldichtewert $k_d$.

Für das folgende wird der Einfachheit halber und weil es für das Verständnis vollkommen ausreichend ist, nicht mehr zwischen Vorlagenbereichen und zweiten Abtastbereichen unterschieden. Es versteht sich jedoch, das die Vorlagenbereiche mit den zweiten Abtastbereichen identisch sind, falls auf das Zusammenfassen von zweiten Abtastbereichen verzichtet wird.

Aufgrund der höheren örtlichen Auflösung des Dichtedatensatzes wird es stets solche Vorlagenbereiche geben, die örtlich, bezüglich der Vorlage V gesehen, in einem ersten Abtastbereich enthalten sind, mit einem solchen überlappen oder zumindest in unmittelbaren Nähe eines solchen liegen. Anhand eines Vergleichs zwischen den Neutraldichtewerten $k_d$ solcher Vorlagenbereiche mit den Neutraldichtewerten $k_0$ der entsprechenden ersten Abtastbereiche ist es dann möglich, aus den Neutraldichtewerten $k_d$ mittels Transformation oder Normierung neue Neutraldichtewerte $k_d'$ zu ermitteln, die weitestgehend an die Neutraldichtewerte $k_0$ des Farbdatensatzes angeglichen sind.

Für die Erstellung der farblichen digitalen Repräsentation des Bildinhalts einer Vorlage V werden dann die örtlich hochaufgelösten Neutaldichtewerte $k_d'$ des Dichtedatensatzes verwendet, welche die Information bezüglich des Bildinhalts liefern, und die Farbkoordinaten $k_1$, $k_2$ des Farbdatensatzes, welche die farbliche Information liefern und den ästhetischen Eindruck des Aufsichtsbildes bestimmen.

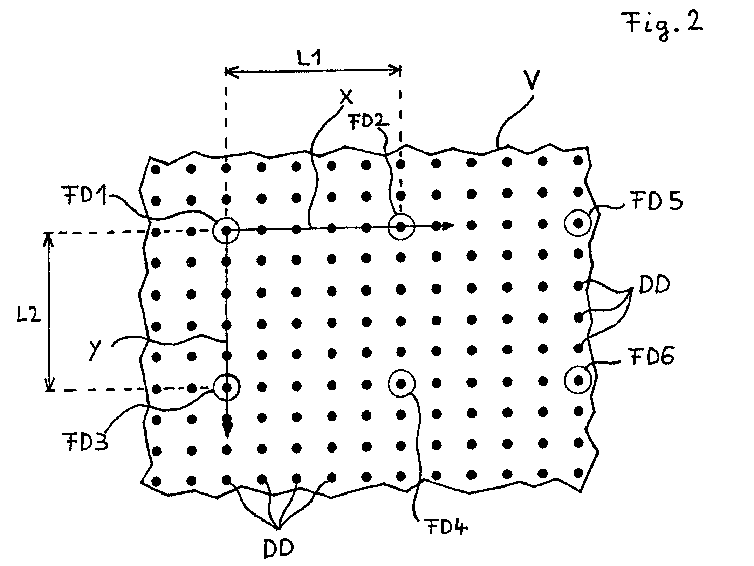

Bei einem bevorzugten Ausführungsbeispiel des erfindungsgemässen Verfahrens wird für jede fotografische Vorlage V aus dem zugehörigen Fabdatensatz mittels Bestimmung von Zwischenwerten ein verfeinerter Farbdatensatz ermittelt, der im wesentlichen die gleiche örtliche Auflösung aufweist wie der Dichtedatensatz. Die Zwischenwerte werden dabei vorzugsweise jeweils mittels einer Interpolation bestimmt, bei welcher die Farbdaten des zu bestimmenden Zwischenwerts aus dem gewichteten Mittelwert der Farbdaten der örtlich unmittelbar benachbarten Abtastbereiche ermittelt werden. Im folgenden wird anhand von Fig. 2 näher erläutert, wie beispielsweise zur Bestimmung des verfeinerten Farbdatensatzes für eine gegebene Vorlage V vorgegangen werden kann. Als konkretes Zahlenbeispiel mögen die folgenden örtlichen Auflösungen dienen (jeweils angegeben in der Form axb, wobei a die Zeilenzahl in der matrixförmigen Anordnung der Abtastbereiche bzw. der Bildpunkte der digitalen Repräsentation angibt und b dieSpaltenzahl): Das farbsensitive Abtastsystem 2 (Fig.1), und damit der Farbdatensatz, hat eine örtliche Auflösung von etwa $39{\times}26$ pro Vorlage, der Dichteabtaster 3 eine maximale örtliche Auflösung von etwa $390{\times}260$ pro Vorlage, und die digitalen Repräsentationen sollen eine örtliche Auflösung von jeweils etwa $190{\times}130$ Bildpunkten aufweisen. Nun wird zunächst durch das vorne beschriebene Zusammenlegen von zweiten Abtastdaten zu Vorlagenbereichen und Transformation bzw. Normierung der Neutraldichtewerte $k_d$ für die gegebenen Vorlage V der Dichtedatensatz mit den Neutraldichten $k_d'$ ermittelt, der eine örtliche Auflösung von $190{\times}130$ aufweist.

Fig. 2 zeigt in einer symbolischen Darstellung einen Ausschnitt der gegebenen Vorlage V, für die der verfeinerte Farbdatensatz erstellt werden soll. Die örtliche Lage der einzelnen Vorlagenbereiche ist durch die mit dem Bezugszeichen DD versehenen kleineren Kreise angedeutet, die örtliche Lage der ersten Abtastbereiche, also die örtliche Lage der einzelnen Farbwert-Tripel des Farbdatensatzes, ist durch die mit den Bezugszeichen FD1 bis FD6 versehenen grösseren Kreise angedeutet. Diese symbolische Darstellung ist aus Gründen der besseren Übersicht etwas vereinfacht und bedarf noch einiger Vorbemerkungen. In der Praxis liegen die einzelnen ersten Abtastbereiche bzw. die Vorlagenbereiche wesentlich näher zusammen, eine entsprechende Darstellung würde jedoch zu zeichnerischen Problemen führen. Die eingezeichneten Kreise DD und FD1-FD6 sind deshalb symbolisch z. B. als Mittelpunkt des jeweiligen Vorlagenbereichs bzw. ersten Abtastbereichs zu verstehen. Um anzudeuten, dass die ersten Abtastbereiche in der Regel grösser sind als die Vorlagenbereiche, sind für die Darstellung der ersten Abtastbereiche die grösseren Kreise FD1-FD6 gewählt. Auch müssen in der Realität die ersten Abtastbereiche nicht jeweils einen Vorlagenbereich enthalten, das aus den ersten Abtastbereichen gebildete Raster kann durchaus gegenüber dem aus den Vorlagenbereichen gebildeten Raster örtlich verschoben sein. Weiterhin muss das Verhältnis der beiden Raster nicht unbedingt ganzzahlig sein. Ferner muss der Abstand L1 zweier in der ersten räumlichen Richtung benachbarten ersten Abtastbereiche (z. B. FD1 und FD2) nicht unbedingt gleich dem Abstand L2 zweier in der zweiten räumlichen Richtung benachbarten ersten Abtastbereiche (z. B. FD1 und FD3) sein. Alle diese Faktoren sind jedoch für das Verständnis nicht wesentlich, und deshalb wird im folgenden auf den in Fig. 2 dargestellten vereinfachten Fall Bezug genommen.

Die relative örtliche Zuordnung der Farbdaten und der Dichtedaten ist im allgemeinen leicht realisierbar, da zum einen die relative örtliche Anordnung des farbsensitiven Abtastsystems 2 und des Dichteabtasters 3 in der Messstation 1 bekannt ist, und zum anderen der Vorschub der Vorlage in der Messstation 1 bekannt oder ermittelbar ist.

Das Ziel bei der Bestimmung des verfeinerten Farbdatensatzes ist es nun, aus den bekannten Farbdaten des Farbdatensatzes für alle Kreise DD (welche die Vorlagenbereiche symbolisieren, von denen ja die zugehörigen Neutraldichtewerte $k_d'$ bekannt sind) mittels Zwischenwertbestimmung jeweils Farbdaten und insbesondere die beiden Farbkoordinaten $k_1$ und $k_2$ zu bestimmen. Dies geschieht z. B. wie folgt:

In Fig. 2 bilden die vier Kreise FD1 bis FD4 ein Interpolationsviereck. Die Berechnung der Farbkoordinaten $k_1$ und $k_2$ für alle diejenigen Kreise DD, die innerhalb dieses Interpolationsvierecks oder auf seinen Seiten liegen, erfolgt jeweils durch Bildung eines gewichteten Mittelwerts der Farbkoordinaten $k_1$ und $k_2$, die zu den vier Kreisen FD1 bis FD4 gehören, d. h. die zu interpolierenden Farbkoordinaten werden jeweils gemäss einer Beziehung der Form:

$$k_j = \frac{\sum_{i=1}^{4} w(i) \cdot k_j(i)}{\sum_{i=1}^{4} w(i)}$$

$j = 1,2; i = 1, 2, 3, 4$

berechnet. Darin bezeichnet $k_j$ ($j=1$ oder $j=2$) die zu interpolierende Farbkoordinate; $k_j$ (i) die Farbkoordinate $k_j$ ($j=1$ oder $j=2$), die zu dem Kreis FDi (i = 1, 2, 3, 4) gehört, und w(i) das jeweilige Gewicht, mit dem die Farbkoordinaten des Kreises FDi in die Interpolation eingehen.

Für die Bestimmung der Gewichte w(i) gibt es mehrere Möglichkeiten, von denen im folgenden einige erläutert werden. Aus Symmetriegründen genügt es jedoch für das Verständnis, zu erklären, wie das Gewicht w(i) für einen der an der jeweiligen Interpolation beteiligten vier Kreise FD1 bis FD4 bestimmt wird. Deshalb wird in den folgenden Erläuterungen nur auf die Bestimmung des Gewichts w(1) der zu dem Kreis FD1 gehörenden Farbkoordinaten eingegangen. Die Bestimmung der Gewichte w(i) (i = 2, 3, 4) für die Farbkoordinaten der drei anderen Kreise FD2 bis FD4 erfolgt in analoger Weise. Da der Index i somit auch nicht mehr vonnöten ist, wird er im folgenden weggelassen.

Zunächst wird, wie in Fig. 2 dargestellt, ein Koordinatensystem mit zwei Koordinatenachsen x und y festgelegt, dessen Ursprung (x=0, y=0) im Zentrum des Kreises FD1 liegt. Die Koordinatenachse x verläuft in Richtung des benachbarten Kreises FD2 und die Koordinatenachse y dazu senkrecht in Richtung des benachbarten Kreises FD3. Somit lässt sich die relative Lage jedes Kreises DD des Interpolationsvierecks - und damit die örtliche Lage jedes zu bestimmenden Zwischenwerts - im Bezug auf das Zentrum des Kreise FD1 durch die beiden Ortskoordinaten x und y beschreiben. Das Gewicht, mit welchem die Farbkoordinaten $k_1$ und $k_2$, die zu dem Kreis FD1 gehören, jeweils in die Interpolation eingehen, lässt sich dann für alle zu interpolierenden Farbkoordinaten an den Orten der Kreise DD des Interpolationsvierecks mittels einer Gewichtsfunktion w(x,y) bestimmen, die von den beiden Ortskoordinaten x und y abhängig ist. Bevorzugt wird die Gewichtsfunktion w(x,y) so gewählt, dass sie die folgenden Eigenschaften hat:

- im Zentrum des Kreises FD1 (x=0, y=0) hat die Gewichtsfunktion ihr Maximum. Dieses Maximum ist z. B. auf den Wert eins normiert;
- bei konstanter Ortskoordinate y ist die Gewichtsfunktion mit zunehmender Ortskoordinate x monoton fallend;
- bei konstanter Ortskoordinate x ist die Gewichtsfunktion mit zunehmender Ortskoordinate y monoton fallend;
- im Zentrum der drei anderen Kreise FD2, FD3, FD4, welche die anderen Eckpunkte des Interpolationsvierecks bilden, hat die Gewichtsfunktion jeweils den Wert Null, d. h. es gilt: w(L1,0) = 0; w(0,L2) = 0; w(L1,L2) = 0.

Die Gewichtsfunktion w(x,y) kann beispielsweise als das Produkt zweier Teilfunktionen u(x,0) und v(0,y) gewählt werden, also w(x,y) = u(x,0)·v(0,y), wobei die erste Teilfunktion u(x,0) nur von der Ortskoordinate x abhängig ist und die zweite Teilfunktion v(0,y) nur von der Ortskoordinate y abhängig ist

Eine spezielle, besonders einfache und deshalb bevorzugte Variante besteht darin, dass die Interpolation linear ist. Die beiden Teilfunktionen u(x,0) bzw. v(0,y) sind dann jeweils linear in der Ortskoordinate x bzw. y, von der sie abhängen. Konkret haben die beiden Teilfunktionen z. B. die folgende Form:

$$u(x,0) = 1 - \frac{x}{L1} \qquad \text{und} \qquad v(0,y) = 1 - \frac{y}{L2}$$

Das Gewicht w, mit dem die Farbkoordinaten, die zu dem Kreis FD1 gehören, in die Berechnung eines Zwischenwertes eingehen, dessen örtliche Lage im Interpolationsviereck durch die Ortskoordinaten x und y mit $0 \leq x \leq$ L1 und $0 \leq y \leq$ L2 gegeben ist, berechnet sich also gemäss der Beziehung w(x,y) = u(x,0)·v(0,y).

In analoger Weise werden auch die drei Gewichte berechnet, mit denen die Farbkoordinaten, die zu den Kreisen FD2, FD3, FD4 gehören, jeweils in die Interpolation eingehen. Somit lassen sich für alle Vorlagenbereiche (angedeutet durch die Kreise DD in Fig. 2), welche innerhalb des Interpolationsvierecks FD1, FD2, FD3, FD4 oder auf seinen Seiten liegen, jeweils die Farbkoordinaten $k_1$, $k_2$ bestimmen.

Diese Interpolationen werden analog auch in anderen Interpolationsvierecken, beispielsweise dem von den vier Kreisen FD2, FD5, FD4, FD6 gebildeten, durchgeführt. Es ist klar, dass sich mit dieser Vorgehensweise für jeden Vorlagenbereich (symbolisch angedeutet durch die Kreise DD) der Vorlage mittels Interpolation die zugehörigen Farbkoordinaten $k_1$ und $k_2$ ermitteln lassen. Die Gesamtheit dieser Farbinformation bildet dann den verfeinerten Farbdatensatz, der die gleiche örtliche Auflösung aufweist, wie der Dichtedatensatz, also in dem erwähnten konkreten Beispiel die örtliche Auflösung 190×130. Die digitale Repräsentation des Bildinhaltes der Vorlage wird dann erstellt, indem die jeweiligen Farbkoordinaten $k_1$ und $k_2$ des verfeinerten Farbdatensatzes mit dem jeweils zugehörigen Neutraldichtewert $k_d'$ des Dichtedatensatzes zusammengefasst werden. Für jeden Bildpunkt der digitalen Repräsentation (in dem konkreten Beispiel gibt es 190×130 solcher Bildpunkte pro digitaler Repräsentation) sind somit die drei Werte $k_1$, $k_2$, $k_d'$ bekannt. Die digitalen Repräsentationen müssen nun gegebenenfalls noch, je nach Ausgabegerät 9 (Fig. 1) für den Indexprint 10, durch eine Umformung, z. B. eine Farbraumtransformation, in ein Datenformat gebracht werden, welches von dem verwendeten Ausgabegerät 9 verarbeitbar ist.

Eine Weiterentwicklung des bevorzugten Ausführungsbeispiels, bei dem mittels Zwischenwertbestimmung für jede Vorlage ein verfeinerter Farbdatensatz ermittelt wird, besteht darin, dass für die Bestimmung der Gewichte, mit denen die jeweiligen Farbkoordinaten des Farbdatensatzes in die Interpolation eingehen, die Dichtedaten des zugehörigen Dichtedatensatzes berücksichtigt werden. Dies bedeutet beispielsweise, dass die Neutraldichtewerte $k_d'$ des Dichtedatensatzes in die Gewichtsfunktionen w(x,y) eingehen. Diese Weiterentwicklung ist insbesondere dann vorteilhaft, wenn der Bildinhalt der Vorlage V scharfe Kanten enthält, an denen grosse Farbunterschiede auftreten. Bei Verwendung der vorne beschriebenen linearen Interpolation kann es nämlich vorkommen, dass solche scharfen Kanten mit grossen Farbunterschieden in der digitalen Repräsentation verschmiert wiedergegeben werden und so auch auf dem positiven kolorierten Aufsichtsbild erscheinen. Solche Effekte können zumindest stark reduziert werden, wenn die in dem hochaufgelösten Dichtdatensatz enthaltene Bildinformation bei der Interpolation der Farbdaten verwendet wird. Die Interpolation ist dann in der Regel nicht mehr linear.

Beispielsweise können diejenigen Dichtdaten, welche örtlich zwischen den niedriger aufgelösten Farbdaten liegen (also z. B. innerhalb eines Interpolationsvierecks) dahingehend analysiert werden, ob eine scharfe Kante in dem Bildinhalt vorhanden ist. Falls dies der Fall ist und diese Kante eine vorgegebenen Steilheit überschreitet, kann die Gewichtsfunktion so gestaltet werden, dass bis zur örtlichen Lage der Kante für die Zwischenwerte als Farbkoordinaten jeweils im wesentlichen die gleichen Farbkoordinaten eingesetzt werden, die zu den örtlich benachbarten Farbdaten des Farbdatensatzes gehören, und eine Änderung der Farbkoordinaten erst ab der örtlichen Lage der detektierten Kante erfolgt.

Ein besonders gut geeignetes Vorgehen, um die Interpolation an den örtlichen Verlauf der Dichtedaten bzw. an die Änderung des Verlaufs der Dichtedaten anzupassen ist das folgende:

Wie bei der vorne beschriebenen linearen Interpolation ergeben sich die Farbkoordinaten $k_1$ und $k_2$ eines Zwischenwerts wiederum als gewichteter Mittelwert der Farbkoordinaten $k_1$ und $k_2$, welche zu den Eckpunkten des Interpolationsvierecks gehören, innerhalb dessen oder auf dessen Seiten der zu interpolierende Zwischenwert liegt. Für das folgende sei wiederum das Interpolationsviereck FD1, FD2, FD3, FD4 (Fig. 2) mit den beiden Koordinatenachsen x und y betrachtet, wie es bereits weiter vorne beschrieben ist. Aus den gleichen Gründen wie vorne, wird auch hier ohne Beschränkung der Allgemeinheit nur erläutert, wie das Gewicht bzw. die Gewichtsfunktion w(x,y) für den Kreis FD1 bestimmt wird.

Die Gewichtsfunktion wird z. B. wiederum, in analoger Weise zur linearen Interpolation, als das Produkt zweier Teilfunktionen u(x,0) und v(0,y) gewählt, also $w(x,y) = u(x,0) \cdot v(0,y)$, wobei die erste Teilfunktion u(x,0) von der Ortskoordinate x abhängig ist und die zweite Teilfunktion v(0,y) von der Ortskoordinate y abhängig ist. Der wesentliche Unterschied zur linearen Interpolation besteht darin, dass die Teilfunktionen u(x,0) und v(0,y) nicht mehr nur von der örtlichen Lage des zu bestimmenden Zwischenwerts abhängig sind, sondern dass sie z. B. wie folgt aus dem örtlichen Verlauf der Dichtedaten bestimmt werden: Zunächst werden anhand der Neutaldichtewerte $k_d'$, die zu den Vorlagebereichen (Kreise DD) gehören, welche auf den Seiten FD1-FD2 und FD1-FD3 des Interpolationsvierecks FD1, FD2, FD4, FD4 liegen (also in Fig. 2 auf den Koordinatenachsen und zwischen den Eckpunkten des Interpolationsvierecks), zwei Dichtefunktionen e(x,0) und f(0,y) bestimmt, die den Verlauf der Dichtedaten auf der x-Koordinatenachse bzw. auf der y-Koordinatenachse beschreiben. Die Dichtefunktionen e(x,0), f(0,y) können in der Praxis diskrete Funktionen sein, oder auch kontinuierliche, beispielsweise anhand der Neutraldichtewerte $k_d'$ ermittelte Interpolationspolynome. Der Anschaulichkeit halber wird im folgenden die für kontinuierliche Funktionen übliche mathematische Nomenklatur bzw. Schreibweise verwendet.

Als nächster Schritt werden zwei Funktionen $s_x(x)$ bzw. $s_y(y)$ bestimmt, die den Betrag der Ableitungen der beiden Dichtefunktionen e(x,0) bzw. f(0,y) beschreiben. Es ist also:

$$s_x(x) = \left| \frac{\partial}{\partial x} e(x,0) \right| \qquad \text{und} \qquad s_y(y) = \left| \frac{\partial}{\partial y} f(0,y) \right|$$

Mit den Funktionen $s_x(x)$ und $s_y(y)$ ist somit der betragsmässige Verlauf der Änderung der Dichtedaten in den beiden Richtungen der Koordinatenachsen x und y bekannt.

Die beiden Teilfunktionen u(x,0) und v(0,y) der Gewichtsfunktion w(x,y) ergeben sich dann durch Integration der Funktionen $s_x(x)$ und $s_y(y)$ entlang der jeweils zugehörigen Koordinatenachse und durch Normierung. Es ist also:

$$u(x,0) = 1 - \frac{\int_0^x s_x(\xi)d\xi}{\int_0^{L1} s_x(\xi)d\xi} \qquad \text{und} \qquad v(0,y) = 1 - \frac{\int_0^y s_y(\zeta)d\zeta}{\int_0^{L2} s_y(\zeta)d\zeta}$$

wobei $\xi$ und $\zeta$ die Integrationsvariablen bezeichnen.

Auch diese beiden Teilfunktionen u(x,0) und v(0,y) der Gewichtsfunktion haben wiederun die Eigenschaften, dass sie monoton fallend in x bzw. y sind, dass sie ihr Maximum bei x=0 bzw. y=0 haben, dass ihr Maximalwert eins ist und dass sie für x=L1 bzw. y=L2 den Wert Null annehmen.

Das Gewicht w, mit dem die Farbkoordinaten, die zu dem Kreis FD1 gehören, in die Berechnung eines Zwischenwertes eingehen, dessen örtliche Lage im Interpolationsviereck durch die Ortskoordinaten x und y mit $0 \leq x \leq L1$ und $0 \leq y \leq L2$ gegeben ist, berechnet sich nun wieder gemäss der Beziehung w(x,y) = u(x,0)·v(0,y).

In analoger Weise werden auch die drei Gewichte berechnet, mit denen die Farbkoordinaten, die zu den Kreisen FD2, FD3, FD4 gehören, jeweils in die Interpolation eingehen. Somit lassen sich für alle Vorlagenbereiche (angedeutet durch die Kreise DD in Fig. 2), welche innerhalb des Interpolationsvierecks FD1, FD2, FD3, FD4 oder auf seinen Seiten liegen, jeweils die Farbkoordinaten $k_1$, $k_2$ bestimmen. Diese Interpolationen werden in analoger Weise auch in anderen Interpolationsvierecken durchgeführt, so dass für jeden Vorlagenbereich (symbolisch angedeutet durch die Kreise DD) der gesamten Vorlage V mittels Interpolation die zugehörigen Farbkoordinaten $k_1$ und $k_2$ ermitteln werden. Die Gesamtheit dieser Farbinformation bildet dann wiederum den verfeinerten Farbdatensatz, der die gleiche örtliche Auflösung aufweist, wie der Dichtedatensatz.

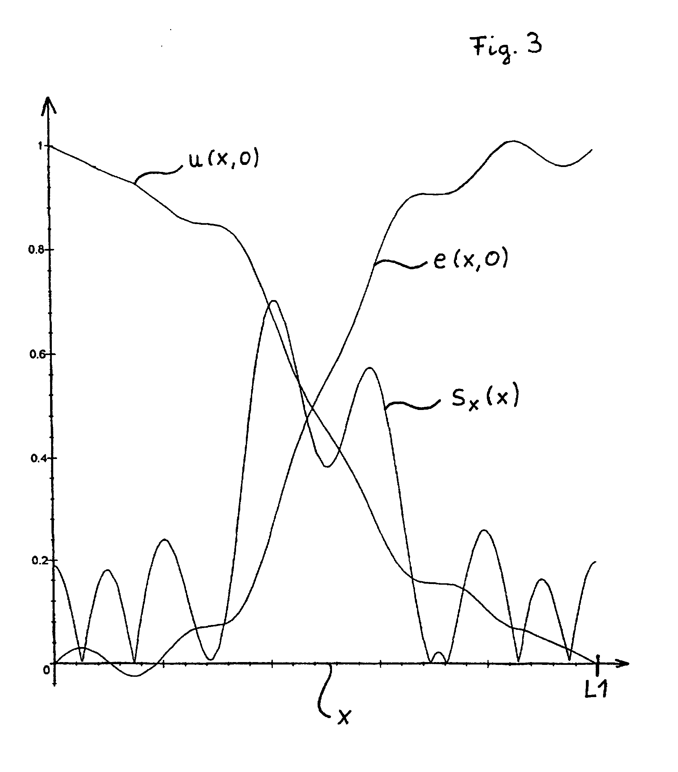

In Fig. 3 ist zur Illustration eine mögliche Dichtefunktion e(x,0), die den Verlauf der Dichtedaten auf der x-Koordinatenachse beschreibt, grafisch dargestellt. Dass die von der Ortskoordinate x abhängige Dichtefunktion gezeigt wird, ist nicht von besonderer Bedeutung, ebensogut könnte die von der Ortskoordinate y abhängige Dichtefunktion gezeigt werden. Ebenfalls dargestellt ist der Verlauf der zu e(x,0) gehörigen Funktion $s_x(x)$, die den Betrag der Ableitung von e(x,0) beschreibt, sowie die sich daraus ergebende Teilfunktion u(x,0) der Gewichtsfunktion für die Richtung der Koordinatenachse x. Auf der Abszisse des Diagramms in Fig. 3 ist die Ortskoordinate x aufgetragen und auf der Ordinate die Werte der auf eins normierten Teilfunktion u(x,0) der Gewichtsfunktion. Der Anschaulichkeit halber sind alle drei Funktionen als kontinuierliche Funktionen dargestellt.

Aus Fig. 3 ist deutlich zu erkennen, dass die Teilfunktion u(x,0) der Gewichtsfunktion dort ihre stärksten Änderungen aufweist, wo die stärksten Änderungen in der Dichtefunktion e(x,0) auftreten. In die Sprache der Farbe übersetzt bedeutet dies, dass die Farbübergänge (starke Änderung der Teilfunktion u(x,0) der Gewichtsfunktion) auf diejenigen Bildbereiche konzentriert sind, in welchen sich die hochaufgelösten Dichtedaten am stärksten ändern. Letzteres ist z. B. an Kanten im Bildinhalt der Vorlage der Fall. Fig. 3 demonstriert somit, dass sich z. B. der vorne beschriebene Effekt der Verschmierung von Kanten dadurch zumindest stark reduzieren lässt, dass die in dem hochaufgelösten Dichtdatensatz enthaltene Bildinformation bei der Bestimmung des verfeinerten Farbdatensatzes verwendet wird.

Wie bereits erwähnt kann es in der Praxis vorteilhaft sein, wenn die Dichtefunktionen e(x,0) und f(0,y) diskret sind. Die oben erwähnten Berechnungen werden dann in sinngemäss gleicher Weise mit den an sich bekannten Methoden der diskreten Integration bzw. Differentiation durchgeführt.

Auch ist es möglich (siehe vorne), dass das örtliche Raster der Dichtedaten gegenüber dem örtlichen Raster der Farbdaten verschoben ist, so dass möglicherweise keine Vorlagenbereiche (Kreise DD, Fig. 2) z. B auf der Verbindungslinie der Kreise FD1 und FD2 liegen. In einem solchen Falle werden für die Bestimmung der Dichtefunktionen die Neutraldichtewerte $k_d'$ derjenigen Vorlagenbereiche verwendet, die am nächsten an dieser Verbindungslinie liegen.

Es ist beispielsweise auch möglich, bei der Berechnung der Funktionen $s_x(x)$ und $s_y(y)$ auf die Betragsbildung zu verzichten und statt dessen eine Quadratbildung durchzuführen, d. h. die Funktionen $s_x(x)$ und $s_y(y)$ sind dann das Quadrat der Ableitung der jeweiligen Dichtefunktion e(x,0) bzw f(0,y).

Weiterhin ist es möglich, die Dichtefunktionen e(x,0), f(0,y) und/oder die Funktionen $s_x(x)$, $s_y(y)$ und/oder die Teilfunktionen u(x,0), v(0,y) der Gewichtsfunktionen zur Verminderung von Störeinflüssen einer Glättung oder einer Filterung zu unterziehen.

Auch ist es möglich, für die Gewichtsfunktion w(x,y) eine andere Form zu wählen als das Produkt der beiden Teilfunktionen u(x,0) und v(0,y), um z. B. noch mehr Informationen aus dem örtlich hochaufgelösten Dichtedatensatz zu verwenden. Eine mögliche Gewichtsfunktion, welche die Informationen bezüglich des Bildinhalts noch stärker berücksichtigt, lautet z. B.:

$$w(x,y) = 1 - \frac{\int_0^x \int_0^y \left\{ \left| \frac{\partial}{\partial \xi} e(\xi,\zeta) \right| + \left| \frac{\partial}{\partial \zeta} e(\xi,\zeta) \right| \right\} d\xi d\zeta}{\int_0^{L1} \int_0^{L2} \left\{ \left| \frac{\partial}{\partial \xi} e(\xi,\zeta) \right| + \left| \frac{\partial}{\partial \zeta} e(\xi,\zeta) \right| \right\} d\xi d\zeta}$$

wobei die Funktion e eine zweidimensionale diskrete oder kontinuierliche Dichtefunktion ist, die den Verlauf der Dichtedaten im Interpolationsviereck beschreibt, und $\xi$ bzw. $\zeta$ wiederum Integrationsvariablen sind.

Nachdem, wie vorne beschrieben, mittels des verfeinerten Farbdatensatzes und des Dichtedatensatzes die digitale Repräsentation für die Vorlage erstellt ist, und somit die vollständige Bildinformation bezüglich Inhalt und Farbe der Vorlage V in digitaler Form vorliegt, muss die digitale Repräsentation noch in ein Datenformat gebracht werden, welches von dem verwendeten Ausgabegerät 9 (Fig. 1) verarbeitbar ist. Kann das Ausgabegerät 9 beispielsweise Blau- Grün- Rot-Daten verarbeiten, so werden die in der digitalen Repräsentation enthaltenen $k_d'$-, $k_1$-, $k_2$-Werte durch eine Farbraumtransformation mittels einer Matrix, die invers zu der in der Beziehung (I) verwendeten ist, transformiert. Falls das Ausgabegerät 9 die digitalen Repräsentationen in einem anderen Datenformat benötigt, so ist es im allgemeinen kein Problem, durch ein entsprechendes Transformationsverfahren die digitalen Repräsentationen in dieses benötigte Datenformat zu überführen. Natürlich werden bei solchen Transformationsverfahren respektive Farbraumtransformationen die vorne erwähnten Normierungen bzw. Korrekturen, die mit den rohen Abtastdaten z. B. zur Kompensation filmtypbedingter Farbstiche oder zur Kompensation von Abweichungen von einer idealen Belichtung durchgeführt wurden, nicht mehr rückgängig gemacht.

Es versteht sich, dass die digitalen Repräsentationen der Bildinhalte der Vorlagen V noch zusätzlichen Verarbeitungsschritten unterworfen werden können, die in der digitalen Bildverarbeitung üblicherweise angewandt werden und an sich bekannt sind.

Beispielsweise können die digitalen Repräsentationen bzw. das digitale Gesamtbild mittels des bekannten Bildbearbeitungsprogramms "Photo-Shop" der Firma Adobe (Mountain View California, USA) weiterbearbeitet werden.

Insbesondere können je nach Ausgabemedium 11 (Fig. 1) oder Ausgabegerät 9 folgende Massnahmen zur Verbesserung des visuellen Eindrucks des Indexprints durchgeführt werden:

Die Gradation und der Kontrastumfang der einzelnen digitalen Repräsentationen oder des digitalen Gesamtbildes wird, z. B. mittels entsprechender Transferkurven (Gradationskurven) in den drei Farbkanälen Blau, Grün ,Rot, der Gradation des Ausgabemediums 11 angepasst.

Die Dichtedaten der Dichtedatensätze werden zur Erhöhung des Schärfeeindrucks des Indexprintes 10 einer digitalen Filterung, z. B. einer geringfügigen Hochpassfilterung, unterzogen.

Es erfolgt eine Anpassung der Farbsättigung, z. B. durch Schrumpfung oder Dehnung der Farbebenen des transformierten und normierten Farbraums.

Die einzelnen, eventuell umgeformten, digitalen Repräsentationen, die zu der wählbaren Anzahl von Vorlagen gehören, von denen positive Aufsichtsbilder auf dem Indexprint 10 enthalten sein sollen, werden elektronisch in an sich bekannter Weise zu einem digitalen Gesamtbild zusammengesetzt. Dieses digitale Gesamtbild kann natürlich auch noch andere Informationen enthalten, die üblicherweise auf Indexprints 10 vorgesehen sind, wie z. B. Bildfeldnummern, individuelle Bildfeldinformationen, auftragsspezifische Daten, (z. B. Filmidentifikationsnummer), Firmenlogo, veränderliche Daten (z. B. das Datum), usw. Von dem digitalen Gesamtbild wird dann mittels des Ausgabegeräts 9 ein Indexprint 10 auf einem Ausgabemedium 11 erzeugt. Als Ausgabegeräte 9 sind beispielsweise Kathodenstrahlröhren (CRT-Belichter), Farbmonitore, Thermo(sublimations-)drucker, Laserdrucker oder Tintenstrahldrucker geeignet. Das Ausgabemedium 11 kann z. B. Fotopapier, eine andere Form von Papier, Folienmaterial, oder ein Farbmonitor sein. Natürlich ist es auch möglich, die digitalen Repräsentationen bzw. das digitale Gesamtbild auf einem Datenträger, z. B. einer Diskette oder einer Foto-CD zu speichern, und von dort den Indexprint 10 bei Bedarf auf einem Farbmonitor sichtbar zu machen.

**Patentansprüche**

1. Verfahren zur Erzeugung von Indexprints mit einer wählbaren Anzahl von positiven Aufsichtsbildern von zugehörigen fotografischen Vorlagen, bei dem:

jede der fotografischen Vorlagen (V) in einer Messstation (1) eines fotografischen Kopiergeräts mittels eines farbsensitiven Abtastsystems (2) in einer Vielzahl von ersten Abtastbereichen fotoelektrisch abgetastet wird, um mit Hilfe von daraus gewonnenen Abtastdaten jeweils Belichtungswerte für die Erstellung fotografischer Kopien von den Vorlagen (V) zu ermitteln;

mittels der Abtastdaten des farbsensitiven Abtastsystems (2) für jede Vorlage (V) ein digitaler Farbdatensatz bestimmt wird, in dem für jeden einzelnen ersten Abtastbereich jeweils repräsentative Farbdaten enthalten sind;

mit Hilfe des digitalen Farbdatensatzes für jede Vorlage (V) eine digitale Repräsentation des Bildinhaltes der Vorlage (V) erstellt wird;

die einzelnen digitalen Repräsentationen der einzelnen fotografischen Vorlagen (V), die zu der wählbaren Anzahl von Aufsichtsbildern gehören, zu einem digitalen Gesamtbild gruppiert werden, von dem mittels eines Ausgabegeräts (9) ein Indexprint (10) auf einem Ausgabemedium (11) erzeugbar ist,

**dadurch gekennzeichnet, dass**

a) ein farbsensitives Abtastsystem (2) mit niedriger bis mittlerer örtlicher Auflösung verwendet wird;

b) die fotografischen Vorlagen (V) in der Messstation mittels eines örtlich hochauflösenden Dichteabtasters (3) in einer Vielzahl von zweiten Abtastbereichen fotoelektrisch abgetastet werden;

c) aus den daraus gewonnenen Abtastdaten des Dichteabtasters (3) für jede Vorlage (V) ein digitaler Dichtedatensatz bestimmt wird, in dem für die Vorlage (V) repräsentative Dichtedaten enthalten sind, und der eine höhere örtiche Auflösung aufweist als der Farbdatensatz;

d) für die Erstellung der digitalen Repräsentation des Bildinhalts der jeweiligen fotografischen Vorlage (V) sowohl der zugehörige Farbdatensatz als auch der zugehörige Dichtedatensatz verwendet wird.

2. Verfahren nach Anspruch 1, **dadurch gekennzeichnet dass** bei der Bestimmung des Dichtedatensatzes jeweils die mittels des Dichteabtasters (3) gewonnenen Abtastdaten aus mehreren zweiten Abtastbereichen zusammengefasst werden, so dass die örtliche Auflösung des Dichtedatensatzes einerseits kleiner ist, als die örtliche Auflösung des Dichteabtasters (3) und andererseits grösser als die örtliche Auflösung des Farbdatensatzes.

3. Verfahren nach einem der vorangehenden Ansprüche, **dadurch gekennzeichnet, dass** für jede fotografische Vorlage (V) aus dem zugehörigen Farbdatensatz mittels Bestimmung von Zwischenwerten ein verfeinerter Farbdatensatz für diese Vorlage (V) ermittelt wird, der im wesentlichen die gleiche örtliche Auflösung aufweist wie der Dichtedatensatz, und dass für die Erstellung der digitalen Repräsentation des Bildinhalts der jeweiligen fotografischen Vorlage (V) sowohl der zugehörige verfeinerte Farbdatensatz als auch der zugehörige Dichtedatensatz verwendet wird.

4. Verfahren nach Anspruch 3, **dadurch gekennzeichnet, dass** die Zwischenwerte zur Erstellung des verfeinerten Farbdatensatzes jeweils mittels einer Interpolation bestimmt werden, bei welcher die Farbdaten des zu bestimmenden Zwischenwerts aus dem gewichteten Mittelwert der Farbdaten der örtlich unmittelbar benachbarten ersten Abtastbereiche ermittelt werden.

5. Verfahren nach Anspruch 4, **dadurch gekennzeichnet, dass** das Gewicht, mit weichem die Farbdaten der einzelnen benachbarten ersten Abtastbereiche in die Interpolation eingehen, jeweils mittels einer Gewichtsfunktion bestimmt wird, die von zwei Ortskoordinaten abhängig ist, welche die relative örtliche Lage des jeweiligen ersten Abtastbereichs im Bezug auf die örtliche Lage des zu bestimmenden Zwischenwerts beschreiben.

6. Verfahren nach Anspruch 5, **dadurch gekennzeichnet, dass** die Gewichtsfunktion das Produkt zweier Teilfunktionen ist, wobei die erste Teilfunktion nur von der ersten Ortskoordinate abhängig ist und die zweite Teilfunktion nur von der zweiten.

7. Verfahren nach einem der Ansprüche 4 - 6, **dadurch gekennzeichnet, dass** für die Bestimmung der Gewichte, mit denen die jeweiligen Farbdaten in die Interpolation zur Erstellung des verfeinerten Farbdatensatzes eingehen, die Dichtedaten des zugehörigen Dichtedatensatzes berücksichtigt werden.

8. Verfahren nach Anspruch 7, **dadurch gekennzeichnet, dass** anhand derjenigen Dichtdaten des Dichtedatensatzes, die zu den zweiten Abtastbereichen gehören, welche bezüglich ihrer örtlichen Lage zwischen den in die jeweilige Interpolation eingehenden ersten Abtastbereichen liegen, die Änderungen der Dichtedaten sowohl in einer ersten Richtung als auch in einer zweiten Richtung ermittelt werden, und diese Änderungen, insbesondere ihre Beträge oder Quadrate, bei der Bestimmung der Gewichte, mit denen die jeweiligen Farbdaten in die Interpolation zur Erstellung des verfeinerten Farbdatensatzes eingehen, berücksichtigt werden.

9. Verfahren nach Anspruch 6, **dadurch gekennzeichnet, dass** die erste Teilfunktion linear von der ersten Ortskoordinate abhängig ist, und dass die zweite Teilfunktion linear von der zweiten Ortskoordinate abhängig ist.

**10.** Verfahren nach einem der vorangehenden Ansprüche, **dadurch gekennzeichnet, dass** die Abtastdaten des farbsensitiven Abtastsystems (2) Farb- und/oder Dichtekorrekturen unterzogen werden und die korrigierten Abtastdaten für die Bestimmung der digitalen Farbdatensätze verwendet werden.

**11.** Verfahren nach einem der vorangehenden Anspüche, **dadurch gekennzeichnet, dass** die Gradation der einzelnen digitalen Repräsentationen oder des digitalen Gesamtbildes der Gradation des Ausgabemediums (11) angepasst wird.

**12.** Verfahren nach einem der vorangehenden Ansprüche, **dadurch gekennzeichnet, dass** die Dichtedaten der Dichtedatensätze zur Erhöhung des Schärfeeindrucks des Indexprintes (10) einer digitalen Filterung unterzogen werden.

**Claims**

**1.** Method of producing index prints with a selectable number of positive printed images from associated photographic originals, whereby:

each of the photographic originals (V) is photoelectrically scanned in a plurality of first scanned regions in a measuring station (1) of a photographic copying device by means of a colour-sensitive scanning system (2) in order to determine respective exposure values from the resultant scanned data with a view to producing photographic copies of the originals (V);

a digital colour data set containing colour data respectively representative of every individual first scanned region is determined for every original (V) from the data scanned by the colour-sensitive scanning system (2);

the digital colour data set is used to produce a digital representation, for every original (V), of the image content of the original (V);

the individual digital representations of the individual photographic originals (V) belonging to the selectable number of printed images are grouped to form a digital composite image, from which an index print (10) can be produced by an output device (9) on an output medium (11),

**characterised in that**

a) a colour-sensitive scanning system (2) with a low to medium local resolution is used;

b) the photographic originals (V) are photoelectrically scanned in a plurality of second scanned regions in the measuring station by means of a density scanner (3) with a high local resolution;

c) a digital density data set for every original (V) is determined from the resultant data scanned by the density scanner (3),which contain density data representative of the original (V) and is of a higher local resolution than the colour data set;

d) both the associated colour data set and the associated density data set are used to produce the digital representation of the image content of the respective photographic original (V).

**2.** Method as claimed in claim 1, **characterised in that** when determining the density data set, the respective scanned data obtained by means of the density scanner (3) is made up of several second scanned regions, such that the local resolution of the density data set is lower than the local resolution of the density scanner (3), on the one hand, and higher than the local resolution of the colour data set on the other.

**3.** Method as claimed in one of the preceding claims, **characterised in that** for every photographic original (V), the associated colour data set is used to determine a refined colour data set for this original (V) by determining intermediate values, which are essentially of the same local resolution as the density data set, and both the associated refined colour data set and the associated density data set are used to produce the digital representation of the image content of the respective photographic original (V).

**4.** Method as claimed in claim 3, **characterised in that** the intermediate values used to produce the refined colour data set are determined respectively by means of an interpolation, by which the colour data for the intermediate value to be determined is obtained on the basis of the weighted mean value of the colour data of the first immediately adjacent local scanned regions.

**5.** Method as claimed in claim 4, **characterised in that** the weighting with which the colour data of the individual adjacent first scanned regions is integrated in the interpolation is determined by means of a weighting function which is dependent on two local co-ordinates, describing the relative local position of the respective first scanned region by reference to the local position of the intermediate value to be determined.

**6.** Method as claimed in claim 5, **characterised in that** the weighting function is selected as being the product of two part-functions, in which case the first part-function will be dependent on the first local co-ordinate only and the second part-function dependent on the second only.

**7.** Method as claimed in one of claims 4 - 6, **characterised in that**, in determining the weightings with which the respective colour data is incorporated in the interpolation to produce the refined colour data set, the density data of the associated density data set is taken into account.

**8.** Method as claimed in claim 7, **characterised in that** the density data of the density data set belonging to the second scanned regions, which lie between the first scanned regions integrated in the respective interpolation in terms of their local position, are used to determine variations in the density data both in a first direction and in a second direction and these variations, in particular their amounts or squares, are taken into account when determining the weightings with which the respective colour data will be incorporated in the interpolation to produce the refined colour data set.

**9.** Method as claimed in claim 6, **characterised in that** the first part-function is linearly dependent on the first local co-ordinate and the second part-function is linearly dependent on the second local co-ordinate.

**10.** Method as claimed in one of the preceding claims, **characterised in that** colour and/or density corrections are applied to the scanned data obtained by the colour-sensitive scanning system (2) and the corrected scanned data is used to determine the digital colour data sets.

**11.** Method as claimed in one of the preceding claims, **characterised in that** the gradation of the individual digital representations or the digital composite image is adapted to the gradation of the output medium (11).

**12.** Method as claimed in one of the preceding claims, **characterised in that** in order to increase the visual sharpness of the index print (10), the density data of the density data set is subjected to a digital filtering process.

**Revendications**

**1.** Procédé de réalisation d'un photo-index avec un nombre pouvant être sélectionné d'images positives d'originaux photographiques correspondants, dans lequel :

chacun des originaux photographiques (V) est analysé de manière photo-électrique dans un poste de mesure (1) d'un copieur photographique au moyen d'un système d'analyse (2) réagissant à la couleur dans un grand nombre de premières zones d'analyse, afin de déterminer, à l'aide de données d'analyse ainsi obtenues, des valeurs d'insolation pour la réalisation de copies photographiques des originaux (V) ;

au moyen des données d'analyse du système d'analyse (2) réagissant à la couleur on détermine pour chaque original (V) un jeu de données de couleur numériques qui contient des données de couleur représentatives de chaque première zone d'analyse individuelle ;

à l'aide du jeu de données de couleur numériques, on réalise pour chaque original (V) une représentation numérique du contenu de l'image de l'original (V) ;

les différentes représentations numériques des différents originaux photographiques (V), qui font partie du nombre pouvant être sélectionné d'images, sont regroupées en une image d'ensemble numérique dont on peut produire, au moyen d'un appareil de sortie (9), un photo-index (10) sur un support de sortie (11),;

**caractérisé en ce que**

a) on utilise un système d'analyse (2) réagissant à la couleur présentant une résolution locale basse à moyenne ;

b) les originaux photographiques (V) sont analysés de manière photo-électrique dans le poste de mesure au moyen d'un analyseur de densité (3) présentant une résolution locale élevée dans un grand nombre de deuxièmes zones d'analyse ;

c) à partir des données d'analyse ainsi obtenues de l'analyseur de densité (3), on détermine pour chaque original (V) un jeu de données numériques de densité qui contient des données de densité représentatives de l'original (V) et qui présente une plus grande résolution locale que le jeu de données de couleur ;

d) pour réaliser la représentation numérique du contenu d'image de l'original photographique (V) respectif, on utilise aussi bien le jeu de données de couleur correspondant que le jeu de données de densité correspondant.

**2.** Procédé selon la revendication 1, **caractérisé en ce que** pour la détermination du jeu de données de densité, on réunit dans chaque cas les données d'analyse obtenues au moyen de l'analyseur de densité (3) provenant de plusieurs deuxièmes zones d'analyse, ce qui fait que la résolution locale du jeu de données de densité est d'une part inférieure à la résolution locale de l'analyseur de densité (3) et d'autre part supérieure à la résolution locale du jeu de données de couleur.

**3.** Procédé selon l'une des revendications précédentes, **caractérisé en ce que** pour chaque original photographique (V) on détermine à partir du jeu de données de couleur correspondant, par détermination de valeurs intermédiaires, un jeu de données de couleur affiné pour cet original (V), lequel présente sensiblement la même résolution locale que le jeu de données de densité, et **en ce que** pour réaliser la représentation numérique du contenu d'image de l'original photographique (V) respectif, on utilise aussi bien le jeu de données de couleur affiné correspondant que le jeu de données de densité correspondant.

**4.** Procédé selon la revendication 3, **caractérisé en ce que** les valeurs intermédiaires pour la réalisation du jeu de données de couleur affiné sont déterminées dans chaque cas au moyen d'une interpolation pour laquelle les données de couleur de la valeur intermédiaire à déterminer sont déterminées à partir de la moyenne pondérée des données de couleur des premières zones d'analyse directement voisines dans l'espace.

**5.** Procédé selon la revendication 4, **caractérisé en ce que** le poids avec lequel les données de couleur des différentes premières zones d'analyse voisines entrent dans l'interpolation, est déterminé dans chaque cas au moyen d'une fonction pondérale qui dépend de deux coordonnées locales qui décrivent la position locale relative de la première zone d'analyse respective par rapport à la position locale de la valeur intermédiaire à déterminer.

**6.** Procédé selon la revendication 5, **caractérisé en ce que** la fonction pondérale est le produit de deux fonctions partielles, la première fonction partielle ne dépendant que de la première coordonnée locale et la deuxième fonction partielle que de la deuxième coordonnée locale.

**7.** Procédé selon l'une des revendications 4 à 6, **caractérisé en ce que** pour la détermination des poids, par lesquels les données de couleur respectives entrent dans l'interpolation pour la réalisation du jeu de données de couleur affiné, les données de densité du jeu de données de densité correspondant sont prises en compte.

**8.** Procédé selon la revendication 7, **caractérisé en ce qu'**à l'aide des données de densité du jeu de données de densité, qui font partie des deuxièmes zones d'analyse, lesquelles se situent en ce qui concerne leur position locale entre les premières zones d'analyse entrant dans l'interpolation respective, on détermine les variations des données de densité dans un premier sens comme dans un deuxième sens, et ces variations, en particulier leurs valeurs absolues ou carrées, sont prises en compte dans la détermination des poids avec lesquels les données de couleur respectives entrent dans l'interpolation pour la réalisation du jeu de données de couleur affiné.

**9.** Procédé selon la revendication 6, **caractérisé en ce que** la première fonction partielle dépend de manière linéaire de la première coordonnée locale, et **en ce que** la deuxième fonction partielle dépend de manière linéaire de la deuxième coordonnée locale.

10. Procédé selon l'une des revendications précédentes, **caractérisé en ce que** les données d'analyse du système d'analyse (2) réagissant à la couleur sont soumises à des corrections de couleur et/ou de densité, et les données d'analyse corrigées sont utilisées pour déterminer les jeux de données de couleur numériques.

11. Procédé selon l'une des revendications précédentes, **caractérisé en ce que** la gradation des différentes représentations numériques ou de l'image totale numérique est adaptée à la gradation du support de sortie (11).

12. Procédé selon l'une des revendications précédentes, **caractérisé en ce que** les données de densité des jeux de données de densité sont soumises à un filtrage numérique pour accroître l'impression de netteté du photo-index (10).

Fig. 1

Fig. 2

Fig. 3